# EUROPEAN PATENT SPECIFICATION

(11) **EP 3 697 624 B1**
(45) Date of publication and mention of the grant of the patent: **10.11.2021**
(21) Application number: 18788855.7
(22) Date of filing: 11.10.2018
(51) Int. Cl.: B42D 25/41, B42D 25/351, B42D 25/435, B42D 25/328, B42D 25/324, B42D 25/342, B42D 25/36, B41M 5/26

(54) **SECURITY DEVICES, SECURITY ARTICLES, SECURITY DOCUMENTS AND METHODS FOR THEIR MANUFACTURE**
SICHERHEITSVORRICHTUNGEN, SICHERHEITSARTIKEL, SICHERHEITSDOKUMENTE UND VERFAHREN ZU IHRER HERSTELLUNG
DISPOSITIFS DE SÉCURITÉ, ARTICLES DE SÉCURITÉ, DOCUMENTS DE SÉCURITÉ ET PROCÉDÉS POUR LEUR FABRICATION

(30) Priority: 19.10.2017 GB 201717189
(43) Date of publication of application: 26.08.2020
(73) Proprietor: De La Rue International Limited, Basingstoke, Hampshire RG22 4BS (GB)
(72) Inventor: WHITEMAN, Robert, Reading Berkshire RG4 7ST (GB); PARKER, Emily, Basingstoke Hampshire RG22 4BS (GB); COMMANDER, Lawrence, Tilehurst Reading RG31 6RR (GB); LOCKE, Rebecca, Basingstoke Hampshire RG22 4BS (GB)
(74) Representative: Gill Jennings & Every LLP
(86) International application number: PCT/GB2018/052922
(87) International publication number: WO 2019/077317

(56) References cited:
- WO-A1-2017/076400
- DE-A1-102006 014 367
- US-A1- 2003 189 031

## Description

This invention relates to security devices, methods for their manufacture, and security articles and security documents to which the security devices may be incorporated. Security devices are used for example on documents of value such as banknotes, cheques, passports, identity cards, certificates of authenticity, fiscal stamps and other secure documents, in order to confirm their authenticity.

Articles of value, and particularly security documents such as banknotes, cheques, passports, identification documents, certificates and licences, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment. Examples include features based on one or more patterns such as microtext, fine line patterns, latent images, venetian blind devices, lenticular devices, moire interference devices and moire magnification devices, each of which generates a secure visual effect. Other known security devices include holograms, watermarks, embossings, perforations and the use of colour-shifting or luminescent / fluorescent inks. Common to all such devices is that the visual effect exhibited by the device is extremely difficult, or impossible, to copy using available reproduction techniques such as photocopying. Security devices exhibiting non-visible effects such as magnetic materials may also be employed.

One class of security devices are those which produce an optically variable effect, meaning that the appearance of the device is different at different angles of view. Such devices are particularly effective since direct copies (e.g. photocopies) will not produce the optically variable effect and hence can be readily distinguished from genuine devices. Optically variable effects can be generated based on various different mechanisms, including holograms and other diffractive devices, moire interference and other mechanisms relying on parallax such as venetian blind devices, and also devices which make use of focusing elements such as lenses, including moire magnifier devices, integral imaging devices and so-called lenticular devices. These will be explained further below.

Another class of security devices are laser markings, which have conventionally been used to apply text or graphics to documents in an irreversible manner, by blackening (carbonisation) or ablating of the material from which the document is made. An example of this is disclosed in WO2010/040972. Some further examples of laser-marked security features are disclosed in WO2011/124920, in which the laser-modified material is itself optically variable, and in US2007/0020530, where a diffractive relief structure is formed in the surface of a plastic layer by laser ablation. In all of these examples, the material forming the layer which is laser-marked is absorbent to the laser wavelength, typically as a result of incorporating a laser-absorbent additive into the polymer. As such, the modification or even destruction of the material caused by the laser irradiation will be exhibited at least on the surface of the material struck by the laser beam, and typically part or all of the way through the rest of the material also.

DE 10 2006 014367 A1 discloses a security device in which either the whole polymer is absorbent or it is transparent to the laser.

New security devices are constantly being sought in order to stay a step ahead of would-be counterfeiters.

In accordance with a first aspect of the invention a method of manufacturing a security device is provided, comprising:
providing a polymer substrate of which a first region is absorbent to a laser wavelength, and a second region is substantially visually transparent and transparent to the laser wavelength, the first and second regions of the transparent polymer layer being laterally offset from one another; and
irradiating part(s) of the first region and part(s) of the second region of the transparent polymer layer with laser radiation of the laser wavelength, to form a laser marking in and/or on the polymer substrate;
wherein, at least during the irradiation of the part(s) of the second region of the transparent polymer layer, the laser radiation is pulsed laser radiation with a pulse duration of 100 ps or less;
such that the appearance of the portion of the laser marking in the first region of the transparent polymer layer is different from the appearance of the portion of the laser marking in the second region of the transparent polymer layer.

The present inventors have found that such a laser marking can be formed in a transparent polymer, which is otherwise transparent to the laser wavelength, using high-energy, short-pulse lasers (e.g. femtosecond lasers) as disclosed in EP2539155, for example. The use of such lasers does away with the need for the polymer to be absorbent to the laser wavelength and in particular it is no longer necessary for the material to include any laser-absorbent additive. Rather, the energy delivered by each laser pulse is so high as to induce multi-photon absorption within the polymer material itself. Since this effect will only be induced where the pulse energy is sufficiently high, the resulting modification of the material will be confined to a highly localised volume at the laser focus position, and will not spread throughout neighbouring portions of the material. As a result, by careful selection of the focal distance and positioning of the polymer layer, if desired, the laser marking can be arranged to be entirely internal to the layer, not breaking either surface of the layer. Various different optical effects can be achieved, as discussed below.

The present inventors have found that the modification of the polymer material by the laser pulses can take a number of different forms, depending on the polymer material in question and the laser parameters such as power level and pulse duration. For instance, the laser irradiation may result in any one or more of: crystallisation (or re-crystallisation) of the polymer; the formation of micro-voids or micro-cracks; changes in the refractive index of the polymer; and the creation of defects in the polymer structure. It has also been found that some such defects and modifications can give rise to optical effects such as fluorescence.

By providing a polymer substrate (which may be single or multi-layered) with two different regions, one absorbent to the laser wavelength and the other not, different types of laser marking can be formed in the substrate without needing to change the laser parameters (although this may optionally also be done as discussed below). As such, if desired, the whole laser marking (first and second portions) can be formed in a single pass by the same laser thereby achieving perfect registration between the two laser marking types. The two portions of the laser marking will have different appearances from each other and the registration between them will be very difficult for a counterfeiter to imitate. It should be noted that the different appearances arise from the laser marking being of a different type in each region and not from the shape or size of the laser marking in each region, or any information it conveys, which can be decided at will and may or may not be different in the two regions.

Preferably, the first and second regions abut one another and in especially preferred cases the first and second portions of the laser marking also abut one another at a boundary between the first and second regions. In this way the high registration is clearly demonstrated to an observer.

In the first region of the polymer substrate, the laser radiation is preferably absorbed resulting in heat causing modification of the polymer substrate. This corresponds to "conventional" laser marking mechanisms. Advantageously the portion of the laser marking in the first region of the transparent polymer layer appears blackened or charred. It may also or alternatively exhibit foaming and/or an expansion in volume.

Preferably, the portion of the laser marking in the second region of the transparent polymer layer is internal to the polymer substrate. That is, it is wholly contained within the substrate and does not extend to an external surface thereof. More preferably, this laser marking is also internal to a single (monolithic) one of the polymer layers, if the substrate is a multi-layered structure. That is, the marking does not extend to the surface of the polymer layer within which it is contained. This can be achieved through control of the focus position as discussed above. Most preferably, the laser marking is surrounded in all directions by portions of the same transparent polymer layer which are not laser marked. That is, the laser marking is surrounded in every direction (i.e. above, below and laterally) by the same material (unmodified portions thereof), all of which has the same response to laser irradiation. In conventional laser markings, this is not possible since the laser marking would necessarily extend to the surface of the laser-markable material on which the laser beam is incident.

Advantageously, the portion of the laser marking in the second region of the transparent polymer layer exhibits any one or more of: a greater optical density than its surroundings; optical scattering; blackening; and diffraction. Generally, the laser marking is preferably of increased optical density relative to its surroundings. It should be noted this need not take the form of a change in colour or a darkening of the material (although this is possible), but it will result in increased obscuration by the laser-marked material relative to the unmarked material, e.g. as a result of optical scattering. The laser marking could comprise an optically scattering structure, such as a matt effect. It is especially preferred that the portion of the laser marking in the second region of the transparent polymer layer is configured as a diffractive structure. It should be noted that the first portion of the laser marking will typically not exhibit any diffractive effect.

For example, it has been found that particularly effective diffractive structures can be formed by arranging the laser marking in the second region to comprise an array of laser-marked dots (circular, square, irregular or any other shape) or lines (e.g. parallel, preferably straight, lines). The dots or lines are spaced by non-irradiated (unmarked) portions of the polymer material. Light passing through the spaces between the dots or lines - either transmitted through the security document under backlit conditions, or reflected from a surface behind the transparent layer - undergoes diffraction and hence appears to a viewer in one or more colours which change as the viewing position moves. The spacing between the dots or lines corresponds to the grating spacing and hence controls the angle over which each wavelength will be diffracted.

This control can be put to good effect to make the marking more complex and hence more difficult to replicate. In a preferred example, the laser marking comprises at least first and second laterally offset areas, the spacing between the dots along the respective lines and/or the spacing between the lines being different in the first area from that in the second area. In this way the two areas will simultaneously diffract different wavelengths of light to the same viewing angle and hence appear differently coloured. Alternatively or in addition, the orientation of the respective lines of dots may be different in the first area from that in the second area. This can likewise be used to provide the two areas with different appearances. The two or more areas can be configured to together depict a multicoloured and/or dynamic image, the various areas of which will change in colour and/or brightness differently from one another as the device is moved.

As noted above, preferably the same laser source is used for irradiation of the first and second portions of the laser marking. This assists in registration and also simplifies manufacture. Likewise it is advantageous if the first and second portions of the laser marking are formed in one continuous laser irradiation step. It should be noted that "continuous" here does not exclude the laser irradiation being pulsed - rather it requires both portions to be formed in one and the same laser marking process. In particularly preferred embodiments, the parameters of the laser irradiation are the same during irradiation of the part(s) of the first region and during irradiation of the part(s) of the second region forming the laser marking. This has the result that the change in laser marking appearance is controlled solely by the boundary between first and second regions of the substrate and hence the change in appearance will occur at a fixed position (only) relative to the substrate. However, it is also possible to vary the laser parameters, e.g. at the transition between the first and second regions, to increase the complexity of the laser marking. For instance, the laser power could be higher in the second region as compared with the first to ensure that the threshold for multi-photon absorption is reached in the section region without causing unnecessary damage to the substrate in the first region.

Various different constructions of the polymer substrate are envisaged. In some preferred embodiments, the polymer substrate comprises a transparent polymer layer incorporating or to which is applied an additive which is absorbent to the laser wavelength, the additive being present in the first region and not in the second region. For instance, the additive could be printed or coated onto the first region of the layer. An example of a laser absorbent additive that works at 1060nm wavelength is antimony-based laser material additives. US6903153 discloses the use of antimony trioxide as a laser material additive. Another example of an antimony-based laser material additive comes in the form of mica platelets that are coated with one or more metal oxides of antimony and/or tin and/or tin dioxide.

In another embodiment, the polymer substrate comprises a first polymer material which is absorbent to the laser wavelength and a second polymer material which is substantially visually transparent and transparent to the laser wavelength, the first polymer material being located only in the first region of the polymer substrate. The first polymer material could be intrinsically absorbent to the laser wavelength, or could itself contain an additive. The first polymer material may or may not be visually transparent. For instance, it could comprise white polycarbonate. The first and second polymer materials could be arranged side by side in a single layer of the polymer substrate (which could be a multilayer structure), one of the polymer materials preferably formed as an insert within the other. Examples of methods for inserting transparent window inserts in a polymer stack are disclosed in British patent application no. 1701798.9.

In other preferred embodiments, the polymer substrate may be a multilayer structure comprising a first layer at least a region of which is formed of the first polymer material, and a second layer formed of the second polymer material, the first and second layers at least partially overlapping one another (possibly via one or more intervening layers) and the first layer including at least one gap therein or a portion thereof which is transparent to the laser wavelength, the gap or portion in the first layer overlapping the second polymer material and corresponding to the second region. Additional layer(s) may also be provided on the outside of the first or second layers, e.g. protective layers. The multiple layers may be laminated together.

The invention also provides a security device comprising a polymer substrate exhibiting a laser marking of which first and second portions have different appearances from one another and are registered to one another, wherein a first region of the polymer substrate is absorbent to a laser wavelength, and a second region of the transparent polymer layer is substantially visually transparent and transparent to the laser wavelength, the first and second regions of the transparent polymer layer being laterally offset from one another, the first portion of the laser marking being located in the first region and the second portion of the laser marking being located in the second region.

This can preferably be manufactured using the method of the first aspect of the invention.

The first and second portions of the laser marking can have any of the attributes already discussed above in relation to the first aspect. Likewise the polymer substrate can have any of the constructions discussed above.

As before it should be noted that the different appearances of the first and second portions is intrinsic to the laser-modified material in each region and is independent of the shape, size or information that the respective portions may convey. That is, a first portion of the laser marking which is identical in size and shape to a second portion of the laser marking will have a different appearance (e.g. colour, presence of diffractive effect etc.) from that second portion.

The invention also provides a security document comprising a security device as described above. The security device can be formed integrally with the security document, e.g. if the document has a polymer substrate as its document substrate, or can be formed on a security article such as a thread, strip, overlay or patch which is incorporated into the document. Example constructions are given below. Preferably the security device may be located in a window region (full window or half window) of the security document.

The invention also provides a plurality of security devices each in as described above, or of security documents each as described above, wherein the relative position of the first and second portions of the laser marking is substantially the same on each of the plurality. The precise register between the first and second portions of the laser marking will be apparent by comparing the documents or devices against one another.

As noted above, in some embodiments the internal laser marking may exhibit fluorescence when illuminated with a corresponding excitation wavelength, preferably ultra violet radiation. This has been found to be a direct result of the described laser irradiation process in certain polymers such as BOPP, PMMA and PET. For instance, laser marked features of the sort disclosed herein, formed in BOPP have been found by the present inventors to fluoresce under UV irradiation: tests confirming this have been carried out under UV illumination at wavelengths of 254 nm, 312 nm and 365 nm (separately). No fluorescence is observed from unmodified BOPP under the same UV wavelengths.

Examples of security devices, articles and documents and methods of manufacture thereof will now be described with reference to the accompanying drawings, in which:
Figure 1(a) shows a first embodiment of a security document in plan view, in which security devices according to embodiments of the invention may be incorporated, (b) and (c) depicting two alternative cross-sections thereof;
Figures 2, 3 and 4 show three further embodiments of security documents in accordance with the present invention (a) in plan view, and (b) in cross-section;
Figure 5 illustrates a further embodiment of a security document in accordance with the present invention, (a) in front view, (b) in back view and (c) in cross-section;
Figure 6 schematically shows exemplary apparatus as may be used in manufacturing methods in accordance with embodiments of the invention;
Figure 7 is a photograph showing an enlarged portion of an exemplary laser marking as may be provided in embodiments of the invention;
Figures 8 and 9 depict two exemplary laser markings as may be provided in embodiments of the invention;
Figures 10 and 11 show two further examples of laser markings as may be provided in embodiments of the invention, in plan view;
Figure 12 illustrates a method of making a security device in accordance with an embodiment of the invention, Figure 12(a) showing schematic apparatus for performing the method; (b) showing an exemplary device in plan view and Figures (c) to (g) showing alternative constructions of the device in cross-section;
Figure 13 illustrates another method of making a security device in accordance with a comparative example, Figure 13(a) showing schematic apparatus for performing the method; (b) showing an exemplary device in plan view and Figures (c) to (f) showing alternative constructions of the device in cross-section;
Figure 14 depicts a method of making a security device in accordance with a comparative example, Figures 14(a), (b) and (c) showing different steps of the method in (i) cross section and (ii) plan view;
Figure 15 depicts another method of making a security device in accordance with a comparative example, Figures 15(a) and (b) showing different steps of the method in (i) cross section and (ii) plan view, and Figure (c) showing schematically a laser marking formed by the method in plan view;
Figure 16 illustrates further methods of making security devices in accordance with comparative examples, in cross section;
Figure 17(a) illustrates a cross section of a security device in accordance with a comparative example, Figure 17(b) showing in plan view an exemplary image array forming part of thereof, and Figure 17(c) showing in plan view the appearance of the security device, at one viewing angle;
Figure 18(a) illustrates an exemplary image array forming part of a security device in accordance with a comparative example and Figure 14(b) shows the security device in plan view;
Figures 19, 2. 20 and 21 show three further comparative examples of security devices ; ;
Figure 22 illustrates a further comparative example of a security (a) in plan view and (b), (c) two alternative cross-sections thereof;
Figure 23 shows another comparative example of a security document;
Figure 24 depicts another method of making a security device in accordance with a comparative example, Figures 24(a) and (b) showing different steps of the method in (i) cross section and (ii) plan view, and Figures (c) and (d) showing schematically two exemplary laser markings formed by the method in plan view; and
Figure 25 shows another example of a security device which can be made using the method of claim 24, (a) before heating and (b) after heating.

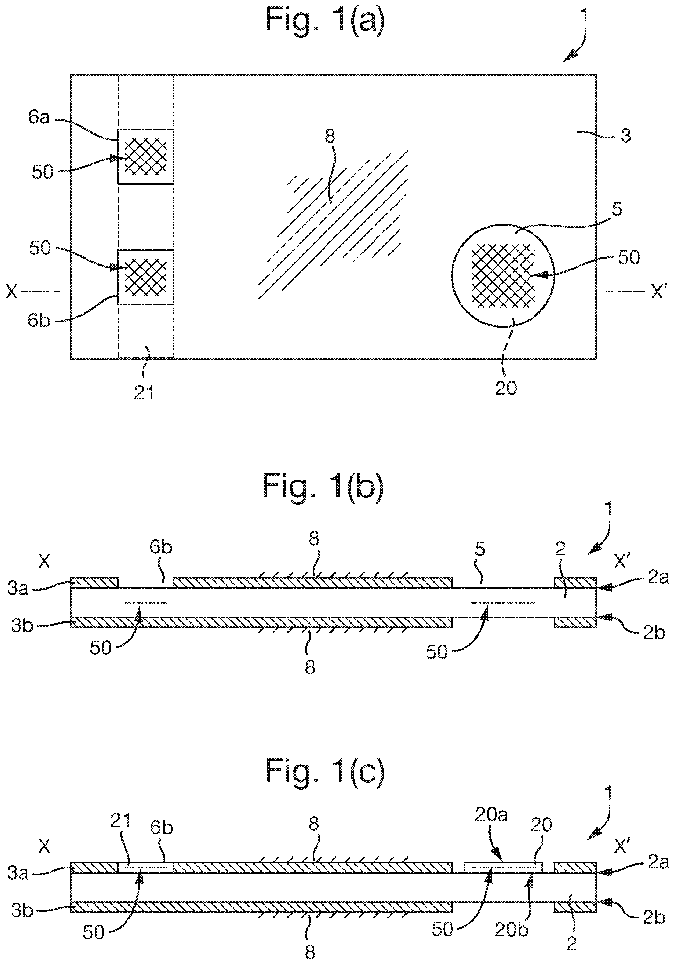

Security devices of the sorts disclosed herein find particular application in security documents such as banknotes, passports and the like. Before describing preferred examples of the security devices in detail, and methods for their manufacture, Figures 1 to 5 present exemplary security document constructions into which the security devices may ultimately be incorporated. Throughout this discussion, the security devices are simply referred to as "laser markings" 50 for brevity but it will be appreciated that in practice any of the security devices described later in this application can be substituted therefor.

In particularly preferred embodiments, the security device (comprising, in general terms, at least a transparent polymer layer having a laser marking) will be incorporated into a window region of a security document. The window region and the transparent polymer layer can be implemented in various different ways, depending on the construction of the security document as a whole. Examples of suitable document structures, and their manufacturing techniques, will first be described with reference to Figures 1 to 5. It should be appreciated that the later-described security device can be incorporated into a security document using any of the exemplary document structures disclosed. They can also be utilized in non-window regions of security documents if desired.

Figure 1 shows an exemplary security document 1, such as a banknote, based on a polymer substrate construction. Figure 1(a) shows the document in plan view and Figures 1(b) and (c) show two alternative cross-sections along the line X-X'. It will be appreciated that the constructions shown are merely exemplary and alternative arrangements are viable.

The security document 1 is based on a polymer substrate 2 which is preferably transparent, i.e. optically clear. The polymer substrate 2 has a first surface 2a and a second surface 2b. It should be noted that wherever components are described herein as being "on" one of the surfaces of the polymer substrate 2, or actions are described as being performed "on" one of said surfaces, this does not require the component or action to be directly on the surface of the polymer substrate. Rather, some intermediate layer, such as a primer layer, could exist immediately on the surface of the polymer substrate itself and the component or action may be applied to or performed on that intermediate layer, unless otherwise specified.

The polymer substrate 2 forms the structural basis of the finished security document 1 and is typically provided initially in the form of a quasi-continuous web, e.g. of width between 0.75 and 1.5 m and typically many tens or hundreds of metres long. The thickness of the polymer substrate is preferably in the range 50 to 100 microns, preferably 60 to 80 microns and most preferably about 70 microns.

The polymer substrate 2 comprises one or more polymeric materials, typically thermoplastics, such as: polypropylene (PP) (most preferably bi-axially oriented PP (BOPP)), polyethylene terephthalate (PET), polyethylene (PE), polycarbonate (PC), polyvinyl chloride (PVC), nylon, acrylic, Cyclic Olefin Polymer (COP) or Cyclic Olefin Copolymer (COC), or any combination thereof. The polymer substrate 2 may be monolithic, e.g. formed from a single one of the above materials, or multi-layered, e.g. having multiple layers of the same type of polymer (optionally with different orientations) or layers of different polymer types.

As mentioned previously, by "transparent" it is meant that the polymer substrate 2 is substantially visually clear, although it may carry a coloured tint and/or another optically detectable substance such as a fluorescent material.

One or both surfaces of the polymer substrate 2 may be treated to improve adhesion / retention of subsequently applied materials. For example, a primer layer may be applied to all or part of either surface of the polymer substrate 2, e.g. by printing or coating. The primer layer is preferably also transparent and again could be tinted or carry another optically detectable material. Suitable primer layers include compositions comprising polyethylene imine, hydroxyl terminated polymers, hydroxyl terminated polyester based co-polymers, cross-linked or uncross-lined hydroxylated acrylates, polyurethanes and UV curing anionic or cationic acrylates.

Alternatively or in addition to the application of a primer layer, the surface of the polymer substrate 2 may be prepared for onward processing by controlling its surface energy. Suitable techniques for this purpose include plasma or corona treatment.

On at least one of the surfaces of the polymer substrate 2, preferably both, one or more opacifying layers 3a, 3b (indicated generally as 3 in Figure 1(a)) are provided. The opacifying layers typically cover a large proportion of the surface area of the security document 1, but are omitted on one or both sides of the polymer substrate 2 in localised areas to form one or more window regions 5, 6, as described further below. The opacifying layer(s) 3 are configured to provide a suitable background for a graphics layer 8, typically applied by printing, which in the case of a banknote generally comprises secure fine line patterns such as guilloches, a portrait, currency and denomination information and the like. Thus the opacifying layers 3 are non-transparent and, in the case of a transparent polymer substrate 2, act to increase the opacity of the document 1 as a whole.

In the window region 5, the opacifying layers 3 are omitted on both sides of the polymer substrate 2, so the window region 5 is a "full window" and, provided the polymer substrate is transparent, will itself be transparent. In the window regions 6a, 6b, on the other hand, the opacifying layer 3a is omitted on one side of the polymer substrate 2 on the other side the opacifying layer 3b remains present. As such, the window regions 6a, 6b are "half windows" which are non-transparent but of lower opacity than the surrounding (non-window) regions of the document 1. It will be appreciated that window regions could additionally or alternatively be provided which contain a mixture of full and half window areas by arranging the gaps in the first and second opacifying layers 3a, 3b to overlap one another only partially (not shown).

Preferably, the opacifying layers 3 comprise polymeric, non-fibrous material containing at least a light scattering substance such as a pigment. The opacifying layers 3 are preferably light in colour, most preferably white or another light colour such as off-white or grey so that a later-applied graphics layer 8 will contrast well against it. In preferred examples, the opacifying layers each have a brightness L* in CIE L*a*b* colour space of at least 70, preferably at least 80 and more preferably at least 90. For example, each opacifying layer may comprise a resin such as a polyurethane based resin, polyester based resin or an epoxy based resin and an opacifying pigment such as titanium dioxide (TiO₂), silica, zinc oxide, tin oxide, clays or calcium carbonate.

Two or more opacifying layers may be applied to each surface of the polymer substrate 2, in order to achieve the necessary opacity. The optical density of each layer by itself may typically be around 0.2 to 0.5. Preferably, three or more layers are applied to each surface, overlapping one another.

In a preferred embodiment, at least one of the opacifying layers (preferably one on each surface of the polymer substrate 2) is made electrically conductive, e.g. by the addition of a conductive pigment thereto. This reduces the effect of static charges which may otherwise build up on the security document 1 during handling.

The opacifying layers are preferably applied to the polymer substrate using a printing process such as gravure printing, although in other case the opacifying layers could be coated onto the substrate, or applied by offset, flexographic, lithographic or any other convenient method. As discussed above, depending on the design of the security document 1, the opacifying layers may be omitted across gaps on one or both surfaces of the polymer substrate to form window regions (which may be full windows or half windows, or a mixture of both). This can be achieved through appropriate patterning of the opacifying layers during the application process.

In alternative constructions, the opacifying layers 3 could comprise self-supporting pre-formed layers (optionally including apertures to later form windows) which are then laminated to the polymer substrate 2. In this case, the opacifying layers could be polymeric or could be of fibrous construction, such as paper, thus rendering the security document a "hybrid" paper/polymer construction.

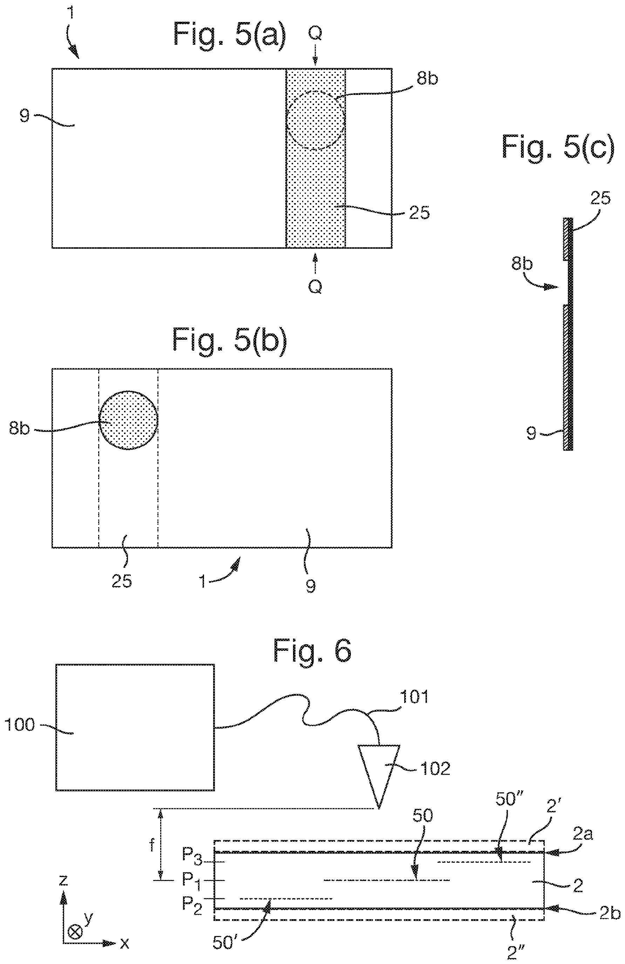

Within one or more of the window regions 5, 6, a laser marking 50 is provided. Examples of suitable laser markings 50, and methods for their formation, will be given below with reference to Figures 6 onward. The laser markings 50 are each internal to a transparent polymer layer. In the Figure 1(b) construction, the polymer document substrate 2 is the transparent polymer layer and the laser marking 50 is internal to that layer 2. That is, the laser marking 50 is wholly contained within the layer 2, and does not extend to (or break) either of its surfaces 2a, 2b. In this way, the laser marking 50 is protected from damage or soiling during handling by the surrounding material of the substrate 2 itself (all of which has the same response to laser irradiation as that which forms the laser marking 50). The laser marking 50 is surrounded by the substrate material in all directions, i.e. above, below and laterally. The laser marking 50 can be formed in the substrate 2 before or after formation of the window regions 5, 6 (i.e. application of opacifying layers 3) using techniques described below.

In the alternative construction of Figure 1(c), the laser marking 50 is not formed in the document substrate 2 but rather in another transparent polymer layer forming part of a security article 20, 21 such as a thread, strip, overlay or patch. The security article 20, 21 is affixed to a surface of the substrate 2, e.g. via an adhesive layer (not shown). The security article may be wholly contained within the window region (as is the case for security article 20 which has the form of a patch and is located within window 5) or may extend beyond the window region (as is the case for security article 21 which has the form of a thread or strip and extends not only across windows 6a and 6b but also the area between them). In this latter case the security article may be located over or under the opacifying layers 3. The security article preferably extends across the whole of the window region (as is the case for security article 21), but this is not essential (as shown by security article 20, which extends only over a portion of window 5).

Again, the laser marking 50 is internal to the transparent polymer layer of the security article 20, 21 and hence does not extend to either of its surfaces 20a, 20b / 21a, 21b. The laser marking 50 can be formed in the security article 20, 21 either before the security article is applied to the substrate 2, or after. Likewise, the opacifying layers 3 can be applied to the substrate 2 before the security article 20, 21 is applied, or after.

Security articles 20, 21 typically comprise a transparent polymer layer formed of PET or the like, which may have a thickness in the range 10 to 70 microns, preferably 20 to 50 microns.

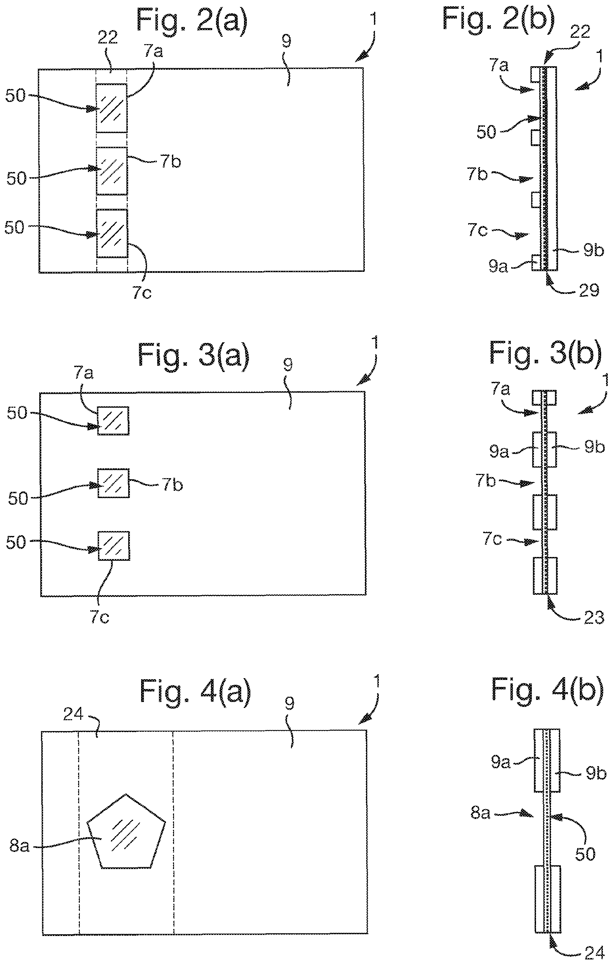

Security articles such as threads, strips, overlays and patches can also be used to incorporate laser markings 50 of the sort herein disclosed into security documents with non-transparent substrates, such as paper. Examples of such constructions will now be described with reference to Figures 2 to 5.

The security article can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0860298 and WO-A-03095188 describe different approaches for the embedding of wider partially exposed threads into a paper substrate. Wide threads, typically having a width of 2 to 6mm, are particularly useful as the additional exposed thread surface area allows for better use of devices with an optical effect, such as the laser markings presently disclosed.

The security article may be subsequently incorporated into a paper or polymer base substrate so that it is viewable from both sides of the finished security substrate. Methods of incorporating security elements in such a manner are described in EP-A-1141480 and WO-A-03054297. In the method described in EP-A-1141480, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer. Techniques are known in the art for forming substantially transparent regions in each of these types of substrate. WO-A-0039391 describes a method of making a transparent region in a paper substrate. Other methods for forming transparent regions in paper substrates are described in EP-A-723501, EP-A-724519, WO-A-03054297 and EP-A-1398174.

The security article may also be applied to one side of a paper substrate so that portions are located in an aperture formed in the paper substrate. An example of a method of producing such an aperture can be found in WO-A-03054297. An alternative method of incorporating a security article which is visible in apertures in one side of a paper substrate and wholly exposed on the other side of the paper substrate can be found in WO-A-2000/39391.

Examples of such security documents and techniques for incorporating a security article will now be described with reference to Figures 2 to 5.

In Figure 2, the security document 1 is a conventional paper-based banknote provided with a security article 22 in the form of a security thread, which is inserted during paper-making such that it is partially embedded into the paper so that portions of the paper 9a, 9b lie on either side of the thread. This can be done using the techniques described in EP0059056 where paper is not formed in the window regions during the paper making process thus exposing the security thread 22 incorporated between layers of the paper. The security thread 22 is exposed in window regions 7a,b,c of the banknote. Alternatively the window regions may for example be formed by abrading the surface of the paper in these regions after insertion of the thread 22. The laser marking 50 is formed on the thread 22, which comprises a transparent polymer layer containing the laser marking 50 therewithin, with an optional reflective layer 29 provided on one side. In this example, the laser marking 50 is configured to be viewed in a reflective mode.

If desired, several different laser markings 50 could be arranged along the thread 22, with different or identical optical effects displayed by each. Alternatively, the laser marking 50 could continue along the whole length of the thread 22 (as shown).

In Figure 3, the construction of the document 1 is much the same as that shown in Figure 2 with the laser marking 50 again being carried on a security thread 23, embedded within a paper substrate 9. However, in this case the thread 23 is exposed though the paper on both sides such that the windows 7a, 7b and 7c are full windows. The reflective layer 29 is omitted from the thread 23 in this example and the laser marking is configured to be viewed in transmitted light. Techniques for producing full thickness apertures in the paper such as this are disclosed in the above referenced documents.

In Figure 4, the security document 1 is again a conventional paper-based banknote, provided with a strip element or insert 24. The strip 24 is based on a transparent polymer substrate and is inserted between two plies of paper 9a and 9b. The laser marking 50 is formed in the polymer substrate of the strip 24. The paper plies 9a and 9b are apertured across region 8a to reveal the laser marking 50, which in this case may be present across the whole of the strip 24 or could be localised within the aperture region 8a.

A further embodiment is shown in Figure 5 where Figures 5(a) and (b) show the front and rear sides of the document 1 respectively, and Figure 5(c) is a cross section along line Q-Q'. Security article 25 is a strip or band comprising a laser marking according to any of the embodiments described below. The security article 25 is formed into a security document 1 comprising a fibrous substrate 9, using a method described in EP-A-1141480. The strip is incorporated into the security document such that it is fully exposed on one side of the document (Figure 5(a)) and exposed in one or more windows 8b on the opposite side of the document (Figure 5(b)). Again, the laser marking formed on the strip 25, which comprises a transparent polymer substrate.

In Figure 5, the document of value 1 is again a conventional paper-based banknote and again includes a strip element 25. In this case there is a single ply of paper. Alternatively a similar construction can be achieved by providing paper 9 with an aperture 8b and adhering the strip element 25 on to one side of the paper 9 across the aperture 9. The aperture may be formed during papermaking or after papermaking for example by die-cutting or laser cutting. Again, the laser marking is formed on the strip 25, which comprises a transparent substrate.

In all of the above embodiments utilising a security article such as a thread, strip or patch, the laser marking 50 can be formed in the transparent polymer layer of the security article before or after incorporation of the article into the security document.

Exemplary laser markings 50 suitable for use in all of the above embodiments, and in the embodiments of security devices disclosed below will now be described. Figure 6 schematically shows an example of apparatus used for forming the laser marking 50. In this example, the laser marking 50 is to be formed in a transparent polymer layer 2 which may be the document substrate of a security document 1 such as a polymer banknote. However, it could alternatively be a layer of a security article such as a thread, overlay or patch as described above. The transparent polymer layer 2 within which the laser marking 50 is formed is preferably monolithic (i.e. is one continuous piece of material, with no interfaces inside it). However, it may form part of a multilayer structure - that is, the layer 2 may have one or more other layers 2', 2" affixed to either of its surfaces 2a, 2b, e.g. by way of lamination. If they are transparent to the laser wavelength, these layers may be provided before or after the laser marking is formed.

A short-pulse laser source 100 is used to irradiate the transparent polymer layer 2 to thereby form the laser marking 50. The laser light generated by the laser source 100 is directed by a suitable guiding means 101 which could be an optical fibre or a series of optical components such as mirrors to an output point 102 which outputs a focussed beam. The focus of the laser beam sits at a focal distance f from the output point 102 and the transparent polymer layer 2 is preferably positioned relative to the output point 102 such that the focus lies inside the layer 2 in the thickness direction (z-axis), although this is not essential in al embodiments - for instance the focal plane could be arranged to substantially coincide with one of the surfaces of the layer 2. The apparatus is configured such that different lateral portions of the layer 2 can be irradiated by the laser, by moving the layer relative to the output point 102 in the x-y plane. In many embodiments, the whole of the laser marking 50 will lie in a single plane P₁, but it is also positive to move the focal position of the laser beam relative to the layer 2 in the z-axis direction in order to form one or more additional portions of the marking 50', 50" in other planes. The various portions of the laser marking may preferably at least partially overlap one another as shown. The focal position can be adjusted either by moving the layer 2 relative to the output point 102 in the z-axis direction and/or by changing the optical properties (e.g. focussing power) of the guiding means 101 and/or output point 102.

The laser source 100 is preferably an ultra-short pulse laser such as a femtosecond laser. Examples of suitable laser sources 100 and guiding means 101 can be found in EP2539155. Typical laser wavelengths that have been found to be effective include those in the visible spectrum (e.g. 400 to 700 nm) and near infra-red spectrum (e.g. 700 to 1100nm). The polymer layer 2 into which the laser marking is formed is preferably transparent to the selected laser wavelength. The laser pulse duration is preferably 100 ps (picoseconds) or less, more preferably 10 ps or less, most preferably 1ps or less. The pulse energy at the focal position is preferably at least 100 nJ, preferably at least 10 µJ.

Exemplary laser sources suitable for use in the presently disclosed methods include high power fibre lasers, such as any of the following commercially available models (laser wavelength is 1030nm):
- Amplitude Systemes Satsuma HP3: pulse duration 400 fs; power 50 W; pulse repetition rate 1 to 2 MHz; pulse energy 40 µJ.
- IPG photonics YLPF-10-500: pulse duration 500 fs; power 10 W; pulse repetition rate 1 MHz; pulse energy 10 µJ.
- Clark MXR Impulse: pulse duration 250 fs; power 20 W; pulse repetition rate 2 MHz; pulse energy 10 µJ.

Another option would be to use a cavity based Yb laser oscillator/amplifier. Commercially available models include the Spectra-Physics Spirit and the Light Conversion Pharos.

Laser irradiation of the sort produced by any of the above laser sources has been found to induce multi-photon absorption mechanisms in transparent polymers including BOPP, PMMA, PC, PET and the like. Depending on the polymer in question and the laser parameters, the irradiation may lead to any of: the crystallisation (or recrystallization) of the polymer, the formation of micro-voids or micro-cracks, or the creation of defects having an optical effect. As noted above, only a small volume of the polymer material located at the laser focus position will be modified by the irradiation since it is only here that the laser energy is sufficiently high to activate the multi-photon absorption. Typically the result is to render the local volume of the polymer more optically dense than the unmodified volumes of the polymer layer although this need not involve any charring or blackening of the material (although this may be provided in some embodiments). The irradiated volume(s) of the polymer layer become more obscure than their surroundings, which remain optically clear. The irradiated and modified volume(s) of the polymer are surrounded in all directions (above, below and laterally) by unmodified volume(s) of the same polymer.

This can be used in a number of ways. In some examples, the obscuring nature of the laser marking 50 is used by itself to present an optical effect, e.g. an optically scattering or matt area which contrasts with its clear surroundings. For instance, the laser marking 50 could be configured to convey one or more indicia by virtue of its shape and/or size. This could be a macro- or micro- sized indicia - that is, visible to the naked eye or, on the other hand, requiring close inspection or magnification to see it.

It has also been found that the described laser marking technique renders the irradiated volume fluorescent in some polymer materials such as BOPP, PMMA and PET. This characteristic can be revealed by illuminating the laser marking with a suitable excitation wavelength, such as ultra violet illumination. For instance, laser marked features of the sort disclosed herein, formed in bi-axially orientated polypropylene (BOPP), have been found by the present inventors to fluoresce under UV irradiation: tests confirming this have been carried out under UN illumination at wavelengths of 254 nm, 312 nm and 365 nm (separately). No fluorescence is observed from unmodified BOPP under the same UV wavelengths. This phenomenon has recently been observed in PMMA in other technical fields, such as optical data storage, and possible mechanisms behind it are discussed in the paper "Ultra-high density optical data storage in common transparent plastics", by Kallepalli, D. L. N. et al. (Sci. Rep. 6, 26163; doi: 10.1038/srep26163 (2016)). In contrast, forming the same laser marked features in a polycarbonate (PC) stack of thickness of about 600 microns (where the stack is produced by fusing a collection of thinner polycarbonate films together under heat and pressure), has been found not to introduce fluorescence under UV illumination.

As alluded to above, the laser marking 50 can also be made to exhibit blackening or charring (i.e. carbonisation). This can be achieved in particular through multiple passes of the laser beam over the same region or via a single pass of sufficient intensity.

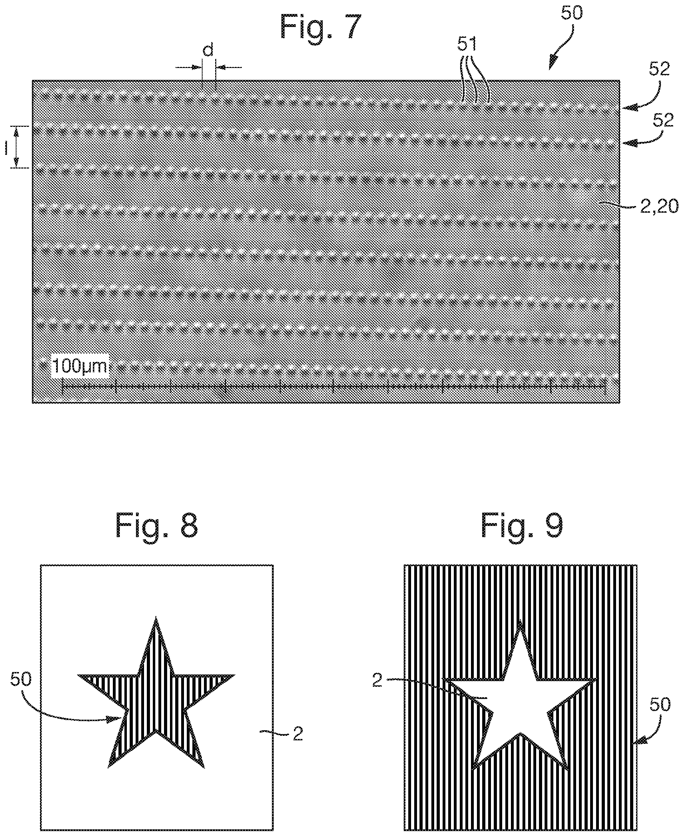

In especially preferred cases, the laser marking 50 may be configured to form a diffractive structure and so present a coloured appearance to the viewer as a result of it diffracting incoming light. For instance, effective diffractive structures have been formed by laser-marking an array of dots or lines into the polymer layer, spaced by non-irradiated portions. A photograph showing an enlarged portion of such an array is provided as Figure 7. The laser-marked dots 51 are arranged in a series of parallel, preferably straight, lines 52. In this example, each dot 51 has a diameter of around 1.2 µm, and is spaced from the next dot 51 by a gap of about 1.2 µm, such that the repeat distance (d) of the dots along each line 52 is about 2.4 µm. The lines 52 themselves are spaced (I) by about 8 µm. It is the spacing between dots 51 along the lines 52 (i.e. 1.2 µm in this case) which determines the angle to which each wavelength of light is diffracted and hence controls what colour will be seen at each viewing angle. If the lines of dots are sufficiently close to one another as to approach the wavelength of light, the line spacing may also have an effect. It should be noted that the individual dots will typically be approximately circular (in plan view) but this is not essential as their shape is not critical.

Other examples of a diffractive structure include arrays of lines - preferably straight, parallel lines - in which case the diffractive properties will be determined by the line spacing.

Again, the lateral extent of the diffractive structure can be configured so as to define one or more indicia such as alphanumeric text, symbols, logos, portraits, graphics etc. The indicia can be positive, i.e. defined by the presence of the diffractive structure, or negative, i.e. defined by its absence. Figure 8 shows an example of a positive indicium in the form of a star shaped area within which the laser marking 50 is present. Figure 9 shows an example of a negative indicium again in the form of a star, but here the laser marking 50 surrounds the star shaped area within which it is absent.

It should be noted that the laser marking 50 could exhibit any combination of these optical effects. For example, the laser marking 50 could comprise a diffractive structure which is also fluorescent, and/or which also exhibits charring.

Further examples of diffractive devices which the laser marking 50 may form are disclosed in EP1049590, EP1196294, EP1781471, EP1977399 and EP1704538. In these examples the diffractive device is configured so as to transform a light beam transmitted therethrough into a patterned beam which, when projected onto a suitable viewing surface, appears as a patterned image. While conventionally such devices have been formed by patterning an opaque layer (e.g. by laser ablation), the presently disclosed laser marking technique can be used instead, to form the necessary arrangement of (relatively) optically dense areas within the polymer layer itself. These will interact with a transmitted light beam in the same manner, resulting in the desired projected image. The laser marking here is a structured element which will manipulate the impinging wavefront of a light beam (by phase shift, reflection, diffraction and/or scattering) such that a predetermined image is visible when a point light source is viewed through the laser marking.

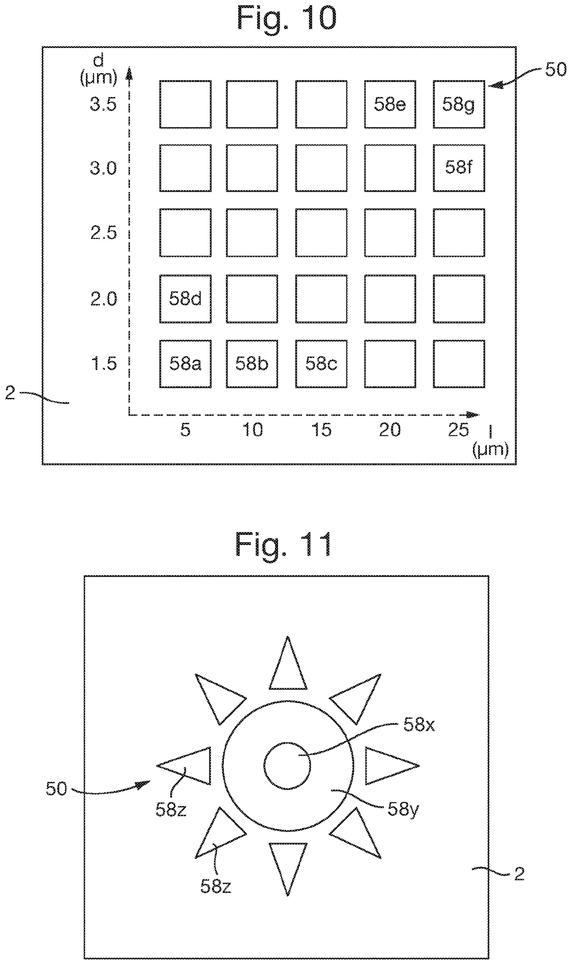

Figures 10 and 11 illustrate some further examples of laser markings 50 which are configured to form diffractive devices (or part thereof). As previously noted with reference to Figure 7, diffractive structures can be formed by laser marking arrays of dots (or lines) into the polymer layer. Typically the dots are arranged in a series of parallel, preferably straight lines. By controlling the dot pitch (d) and/or the line spacing (I), the angle to which the diffractive structure redirects each wavelength of light can also be controlled. In the examples of Figures 10 and 11 each laser marking 50 comprises at least two laterally offset areas in which the dot pitch and/or line spacing is different so that when viewed simultaneously from the same viewing angle the appearance of the at least two areas differs from one another, e.g. in terms of colour and/or brightness.

Figure 10 shows an example of a laser marking 50 comprising a plurality of laterally offset areas of which some are labelled 58a, 58b, 58c, etc..... In this example, each area 58a, 58b... is a square or rectangular area and the set of areas is arranged on an orthogonal grid. The areas here are spaced from one another by unmarked regions of the polymer layer 2, but this is not essential and the areas could abut one another. Each area 58a, 58b contains a diffractive structure formed of laser irradiated dots arranged in lines, such as that described with reference to Figure 6 above. However, the dot pitch (d) and/or line spacing (I) is different in each of the areas 58a, 58b etc. For instance, in area 58a, the dot spacing is 1.5 µm and the line spacing is 5 µm, while in area 58d, the dot spacing is 2 µm and the line spacing is 5 µm, and in area 58g, the dot spacing is 3 µm and the line spacing is 25 µm. When the device 50 is viewed from any one viewing angle, the areas 58a, 58b etc will each simultaneously have a different appearance in terms of colour and/or brightness as a result of the different angles to which each area is diffracting light. An impression of movement is created as the sample is moved (i.e. tilted and/or rotated) so different gratings are emphasised. In particular, colour moves across the different gratings as the sample is tilted. If desired, the areas 58 can be configured and arranged to act together as pixels of an image, the parameters of the diffractive structure in each area being selected so as to give rise to the desired colour for that pixel.

Depending on the polymer material 2, the laser marking 50 may also exhibit fluorescence as mentioned above. The intensity of the emitted fluorescence will also vary from area to area as a result of the differing proportion of laser-marked material to non-laser-marked material in each area. For instance, in this example, area 58a will emit the greatest level of fluorescence because this area will have the greatest number of laser-marked dots (and hence volume of modified plastics material) relative to the other areas 58.

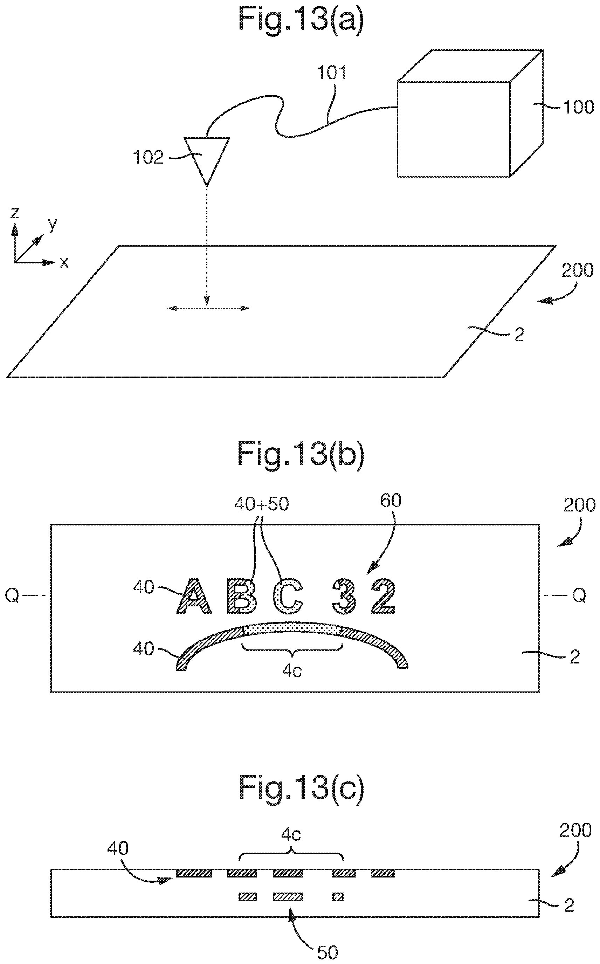

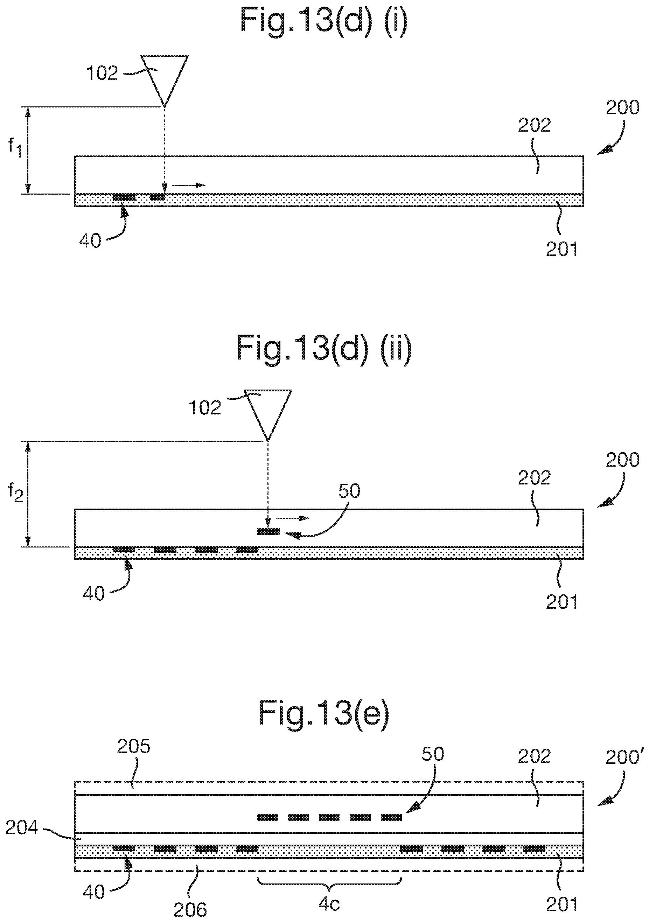

Figure 11 shows another example of a laser marking 50 employing the same principles as in the Figure 13 embodiment. In this example the laser marking 50 is made up of a plurality of laterally offset areas 58x, 58y, 58z..., which are configured to together represent an indicia which in this case is a sun-shaped symbol. Areas 58x and 58y are concentric circular areas abutting one another which together form the central area of the sun symbol, and areas 58z are triangular areas arranged along radii to illustrate the sun's rays. Areas 58z are each spaced from each other and from the area 58y by unmarked areas of polymer layer 2. Each area 58x, 58y, 58z contains a laser marked diffractive structure such as those described above. The dot spacing (d) and/or the line spacing (I) is varied between the different areas with the result that as the device is tilted and/or rotated different ones of the areas direct light to the viewer, and the colours vary. For instance the various diffraction gratings could be configured so that the different areas 58x, 58y, 58z appear to "switch on" in sequence from the centre of the indicia outward and then back in towards the centre as the device is tilted, to give an expansion/contraction effect. Many other forms of animation are also possible.

For instance, the laser marking 50 could be configured to display different images at different viewing angles, by interleaving elements of two or more images and arranging the parameters of the diffraction structures to differ between images. Thus, the elements of one image will appear bright at one viewing angle, while the elements of the other image(s) will appear dark, and as the viewing angle is changed different ones of the images will be illuminated. This can be configured to give rise to switching or animation effects depending on the choice of images. Examples of devices operating on this principle (but formed using conventional processes) are disclosed in WO99/59036 and WO2006/061586.

It should be noted that whilst the laser markings described herein are primarily described as being visible to a (human) observer, they can also be detected by machine. For instance, where the laser marking comprises a diffractive structure, the angle to which it will diffract a certain wavelength of light is predictable and hence the feature can be checked by using a reader to detect the diffracted light and confirm that it is located at the expected position and is of the expected wavelength. If the laser marking comprises multiple areas with different diffractive structures, one or more than one of these areas can be checked in this way to confirm the authenticity of the feature.

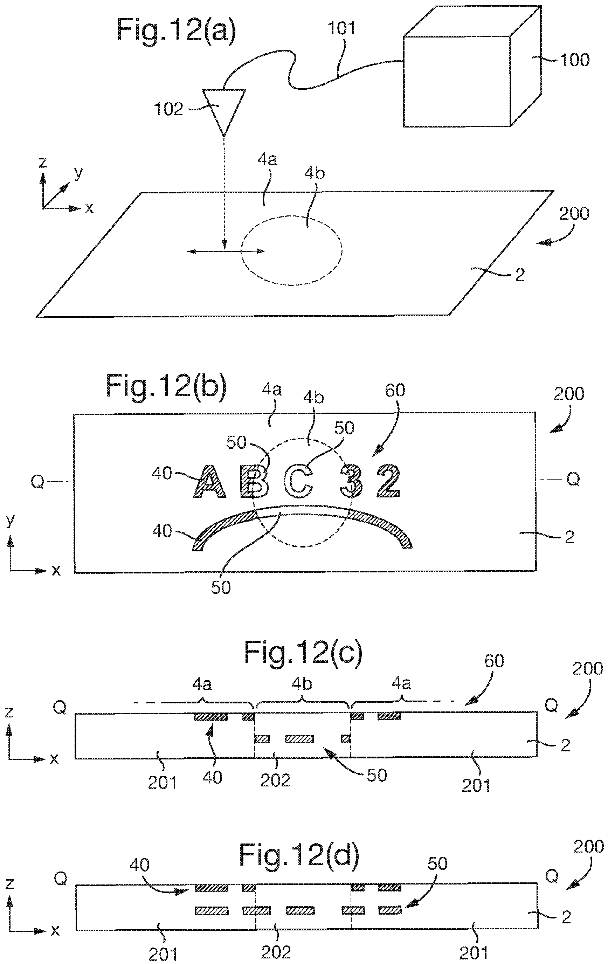

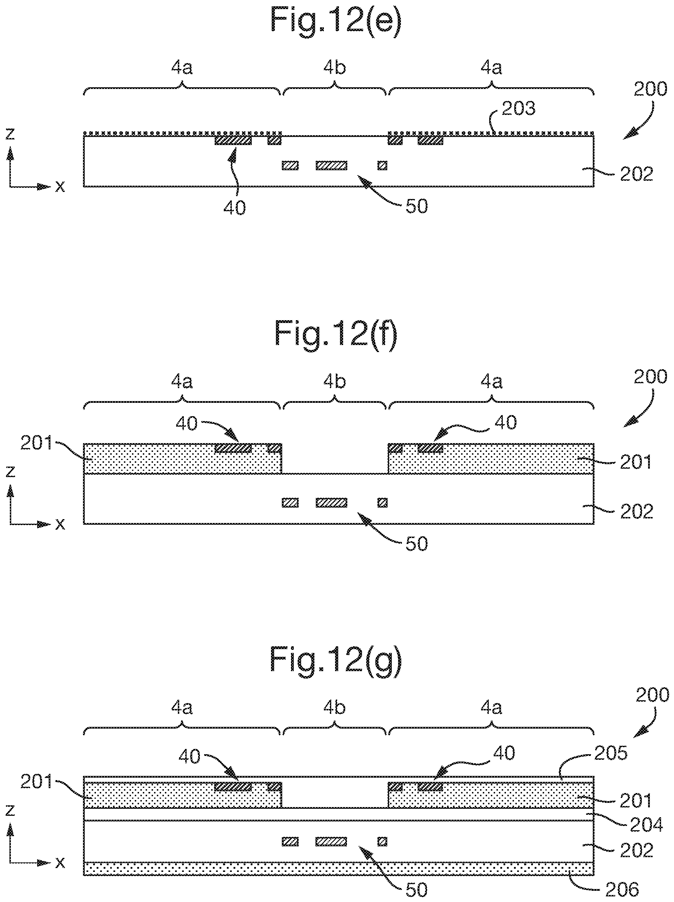

Particular preferred embodiments of security devices incorporating laser markings of any of the sorts mentioned above, and methods for their manufacture, as well as some comparative examples, will now be described with reference to Figures 12 to 23.

Figure 12 illustrates an exemplary method of manufacturing a security device, in accordance with the present invention, in which a polymer substrate 200 is provided of which a first region 4a is absorbent to a laser irradiation wavelength and a second region 4b, laterally offset from the first region 4a, is both visually transparent and transparent to the laser wavelength (in the sense that it will not be marked by conventional laser marking methods but requires the inducement of multi-photo mechanisms as discussed above). The first region 4a may or may not be visually transparent - e.g. it could be translucent or even opaque. Various constructions of the polymer substrate are possible and examples will be given below.

A laser marking 60 is formed in the polymer substrate 200 using laser marking apparatus 100, 101, 102 as described above with reference to Figure 6. The laser marking is formed such that a first portion thereof lies in the first region 4a of the substrate 200 and a second portion thereof lies in the second region 4b. An example of such a laser marking 60 formed in this way is shown in plan view in Figure 12(b), where the first portion of the laser marking is denoted 40 and the second is denoted 50. Here, the marking as a whole comprises the alphanumeric text "ABC 32", with an arc underneath. The "A" and the "2" each fall wholly within the first region 4a while the "C" falls wholly within the second region 4b and the "B" and "3" cross the boundary between the two regions. Due to the different absorptive properties of the substrate in the two regions, the mode of laser marking is different in the two regions. In the first region 4a, the laser wavelength is absorbed, resulting in localised heating of the substrate leading to blackening or charring or foaming or expansion of the polymer material in the first portion 40 of the laser marking. This amounts to conventional laser marking and generally results in a static, black or grey marking. In the second region 4b, an internal laser marking (second portion 50) of the sort described previously is formed by way of multi-photon absorption processes. As described above this can have various different optical effects such as increased optical density, optical scattering, diffraction and/or fluorescence. Most preferably the second portion 50 is formed as a diffractive structure such as any of those described in the previous embodiments.

This method enables the first and second portions 40, 50 of the laser marking 60 to be precisely registered to one another, because they are formed in one cohesive substrate and can be formed using the same laser apparatus. Most preferably both portions of the laser marking are formed in one continuous laser processing step (e.g. without removing the laser beam from the substrate, although it may be pulsed - and will be, at least in the second region 4b). The laser parameters may be constant throughout irradiation of both portions of the marking 60, or could be varied, e.g. by increasing the laser power when irradiating the second portion 50 in order to induce the required laser marking. In the second portion 50 the marking is formed using a short pulse laser beam as described above in relation to Figure 6.

Preferably, to demonstrate the high register the first and second regions 4a, 4b abut one another and in especially preferred cases the first and second portions 40, 50 of the laser marking also abut one another at a boundary between the first and second regions. In the present example this is provided by letters "B" and "3" which cross the boundary and the arch underneath.

Various constructions of the polymer substrate are possible. In the Figure 12(c) example, the substrate 200 comprises a single layer 2 (although this could form part of a larger multilayer assembly), the layer 2 being formed of first and second polymer materials 201, 202 in offset regions corresponding to the first and second regions 4a, 4b. One material can be inserted into the other as a plug for example. Suitable methods for forming this type of construction are provided in British patent application no 1701798.9. The material 201 is absorbent to the laser wavelength while the material 202 is transparent to both the laser wavelength and to visible wavelengths (e.g. BOPP, PET). The material 201 may be visually transparent or not (e.g. white polycarbonate).

The cross section of Figure 12(c) shows the two portions 40, 50 of the laser marking 60 and it will be seen that they sit at different levels within the layer 2. First portion 40 is located at the surface of the absorbent material layer 2 in material 201 while second portion 50 is internal to material 202, as described above.

The construction of Figure 12(d) is similar to that of Figure 12(c) except that here both materials 201, 202 are visually transparent. Material 201 in the first region 4a may for example include a laser absorbent additive to render it absorbent to the laser wavelength in use. For instance, one example of an additive that works at 1060nm wavelength is antimony-based laser material additives. US6903153 discloses the use of antimony trioxide as a laser material additive. Another example of an antimony-based laser material additive comes in the form of mica platelets that are coated with one or more metal oxides of antimony and/or tin and/or tin dioxide. In this case, although not essential, it may be possible to form the internal laser marking 50 in both regions 4a, 4b of the substrate, although the surface marking 40 will only occur in the first region 4a.

Figure 12(e) shows an alternative construction in which the substrate 200 is again of a single layer construction (which could be subsumed into a multilayer structure) but here the whole layer is formed of a material 202 which is transparent to the laser wavelength, and is visually transparent (e.g. BOPP, PET). A laser absorbent additive 203 is applied to a surface of the layer 202 e.g. by coating or printing, only in the first region 4a leaving the second region 4b clear of the additive. The same result as shown in Figure 4(c) is achieved.

In Figure 12(f), an example of a multilayer polymer substrate 200 is shown. Here the first, laser absorbent, material 201 and the second, laser transparent, material 202 are provided in separate overlapping layers. Again the first material 201 may or may not be visually transparent whereas the second material 202 will be visually transparent. The two layers may be laminated together. In this example there is a gap in the first layer 201 which defines region 4b. In other examples rather than include a gap in this layer, the layer 201 could itself be formed of two materials, e.g. as for the layer 2 shown in Figure 12(c) and (d). After laser irradiation as described, the first portion 40 of the laser marking 60 will be formed in the first material layer 201 and the second portion 50 in the second material layer 202.

Figure 12(g) shows a further example of a multilayer substrate construction which is functionally the same as that of Figure 12(f) but is included to illustrate that one or more (laser and visually transparent) intervening layers 204 may be provided between materials 201 and 202, and/or outer layers such as 205 and 206 may also be provided. On the side away from the laser beam, layers such as 206 need not be transparent, although this is preferable to enable the visualisation of the device in a clear window.

Figure 13 illustrates embodiment comparative example of a method for manufacturing a security element which can be used to form devices with the same visual effects as those described with reference to Figure 12. Here, the substrate 200 can be of uniform construction across the whole area in which the laser marking 60 is to be formed. To make the laser marking 60, the properties of the laser irradiation are switched between a first set of properties used to form a first portion 40 of the laser marking 60 and a second set of properties used to form a second portion 50 of the laser marking 60. In this case the substrate 200 will be absorbent to the laser radiation across the whole area. However it may not be the full thickness of the substrate 200 which is absorbent - this may be restricted to an internal layer of the substrate 200. Preferably the substrate as a whole is visually transparent although this is not essential.

Figure 13(b) shows the resulting laser marking in plan view and it will be seen that this is the same as that in Figure 12(b). In the first portion 40, the laser marking has a different appearance from that in second portion 50. For instance, the first portion 40 will typically appear blackened or charred while the second portion 50 may display any of the optical effects discussed above such as increased optical density, optical scattering, fluorescence and/or diffraction. This is achieved by changing the properties of the laser beam so as to achieve different modes of marking in the two portions. In the second portion 50 the marking is formed using a short pulse laser beam as described above in relation to Figure 6.

As before, various constructions of the substrate 200 are possible. Figure 13(c) shows a single layer construction in which the whole layer 2 is both visually transparent and absorbent to the laser wavelength. For instance this may comprise a polymer such as BOPP or PET having a laser absorbent additive dispersed therein. In this case the charring effect seen in the first portion 40 may also be present in the second portion 50, but the internal marking will only be present in the second portion 50, distinguishing it visually from the first portion 40.

Figures 13(d)(i) and (ii) show the same substrate 200 at different stages during the laser marking. Here the substrate 200 is a multilayer substrate having at least a first material layer 201 which is absorbent to the laser wavelength and a second overlapping material layer 202 which is transparent thereto. The first material layer 201 is preferably visually transparent but this is not essential. The second material layer is visually transparent. The first material layer 201 could be replaced by printed or coated laser absorbent additive. The substrate 200 is irradiated using a laser beam 102 from the side of the substrate adjacent to the second material layer, so that depending on its focal position it need not strike layer 201. To form the first portion 40 of the marking 60, the laser is configured so that the beam is transmitted through the layer 202 to the absorbent layer 201 where the marking 40 will be formed. To form the second portion 50 of the marking 60, the laser parameters are changed, e.g. by shortening its focal distance from f1 to f2 (or moving the substrate relative to the laser) and increasing the laser power so as induce multi-photon absorption as discussed before. The underlying layer 201 may or may not also become marked during this process.

Figure 13(e) shows a further example of a multilayer substrate construction which is functionally the same as that of Figure 12(d) but is included to illustrate that one or more (laser and visually transparent) intervening layers 204 may be provided between materials 201 and 202, and/or outer layers such as 205 and 206 may also be provided. On the side away from the laser beam, layers such as 206 need not be transparent, although this is preferable to enable the visualisation of the device in a clear window.

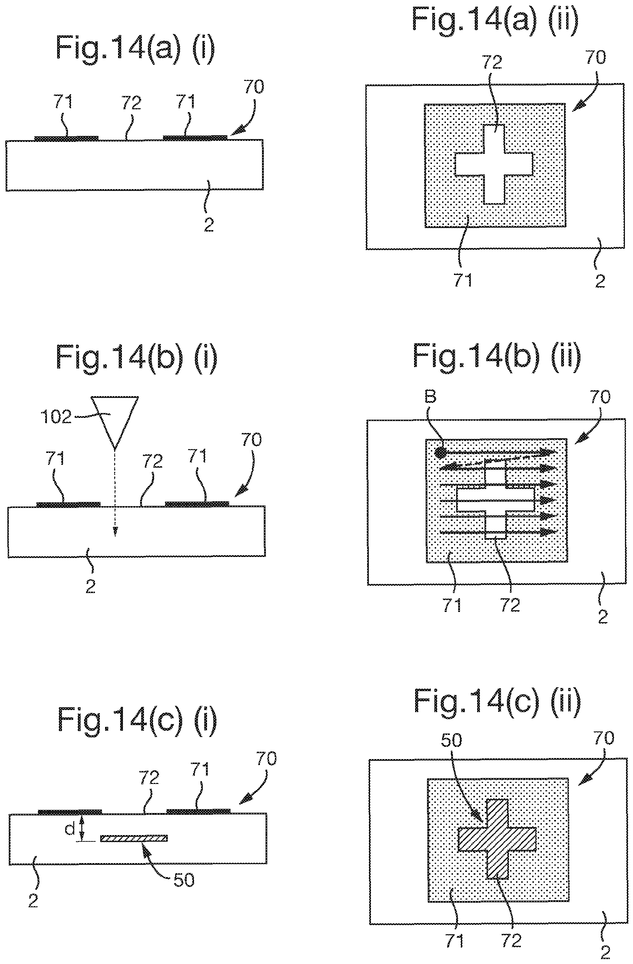

Another comparative example of a method for manufacturing a security device will now be described with reference to Figure 14, in which Figures (a), (b) and (c) depict various stages in the process in (i) cross-section and (ii) plan view. A transparent polymer layer 2 is provided, which is visually transparent and transparent to the laser wavelength. Here this is illustrated as a single monolayer of material but it could form part of a multilayer structure, parts of which could be absorbent to the laser wavelength (e.g. the substrate 200 shown in Figure 13(d) could be used). In a first step, a pattern or mask 70 is applied to a first surface of the layer 2 (again, there could be an intervening layer or more, if transparent), as shown in Figure 14(a). The pattern 70 comprises one or more first pattern elements 71 which will relatively obstruct the transmission of the laser wavelength therethrough, and one or more second pattern elements 72 which will relatively allow the transmission of the laser wavelength therethrough. In this example there is a single first pattern element 71 and a single second pattern element 72, which is shaped as a cross. The first pattern element surrounds the second pattern element to define its periphery. In preferred embodiments the first pattern elements 71 may entirely block the passage of the laser wavelength and/or the second pattern elements 72 may let it pass unhindered, but this is not essential provided the difference between the degree of transmission is sufficient to achieve a noticeable difference between the laser markings formed in alignment with the first pattern elements and those (if any) formed in alignment with the second pattern elements.

At least a first region of the pattern (possibly all) is then irradiated with the laser irradiation as shown in Figure 14(b). Preferably this is done uniformly (and from the same irradiation angle), e.g. by rastering the beam across the pattern as illustrated in Figure 14(b)(ii).

The result is a laser marking 50 formed within the layer 2, or on the second surface thereof (depending on the focus position), which is present in those areas corresponding to the second pattern elements 72, and preferably not elsewhere (if some radiation has passed through the pattern elements 71 this will be attenuated to an extent that any optical effect elsewhere is much reduced if not eliminated). The laser marking 50 can have any of the attributes discussed above in previous embodiments, e.g. increased optical density, optical scattering, fluorescence and/or diffraction. Most preferably the laser marking 50 is configured as a diffractive structure as previously described.

Since the laser marking 50 has been formed via the pattern 70 (which remains affixed to the layer 2 and is a permanent feature of the security device), it exhibits exact register with the pattern 70. This is very hard to replicate by other means and therefore presents a significant challenge to the counterfeiter. If an optical spacing d is provided between the pattern 70 and the laser marking 50, parallax effects may be visible as the device is tilted, revealing the edges of the laser marking 50 to the viewer through the pattern 70.

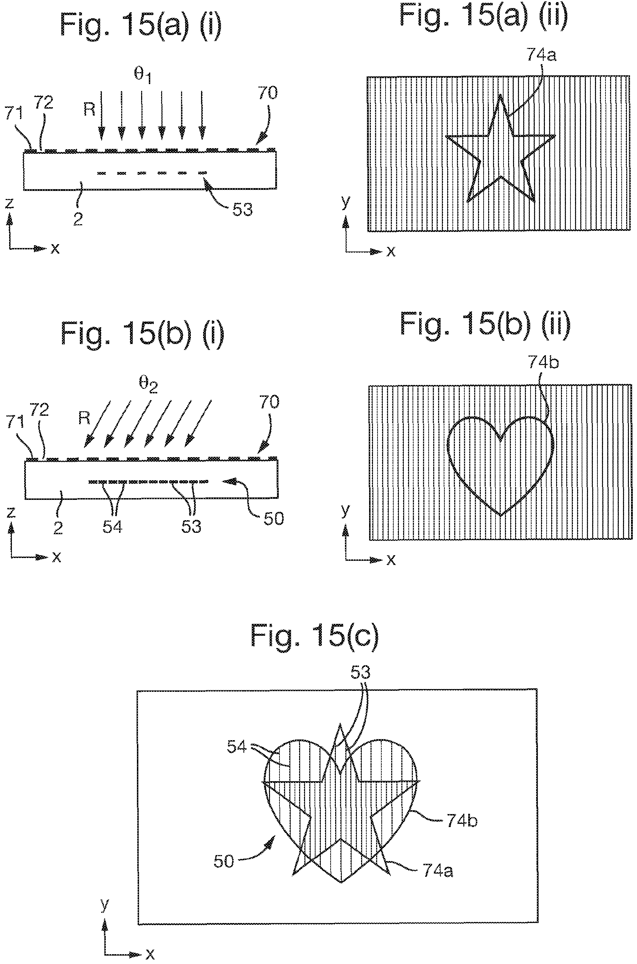

The same principles can be applied to make more complex devices as will be described with reference to Figure 15. Here, as shown in Figure 15(a), the pattern 70 applied to the layer 2 is a line pattern of laser-opaque lines 71 spaced by gaps 72. The layer 2 is first irradiated by laser over a first region 74a, which here has the shape of a star. This first irradiation takes place from a first irradiation angle θ₁ which here is on the normal to the layer 2. The result is the formation of laser marked lines 53 which constitute a first set of laser marked elements and are located immediately under the gaps 72 in the first region 74a. Next, as shown in Figure 15(b) a second radiation step is performed in which the pattern 70 is irradiated over a second region 74b, which here has the shape of a heart and partially overlaps the first region 74a. The second irradiation is performed from a second irradiation angle θ₂, which is different from θ₁, e.g. 30 degrees from the normal. This will result in a second set of laser marked lines 54, located between the lines of the first set 53. A schematic plan view of the resulting laser marking 50 showing both sets of lines 53, 54 is depicted in Figure 15(c). When the device is viewed in reflection or transmission, the pattern 70 and the marking 50 will cooperate to present an optically variable effect. From a normal viewing angle, the first set of lines 53 will be visible and hence the first region 74a depicting a star will be displayed. From a different viewing angle (e.g. 30 degrees), the first set of lines 53 will now be hidden and the second set of lines 54 revealed, showing the heart-shaped second region 74b.

It will be appreciated that any number of illuminations at different irradiation angles could be performed, across corresponding regions. Further, the various irradiations could be performed simultaneously with one another.

It should also be noted that it is not essential for the first and second (or any subsequent) regions to be different from one another - they could be identical in terms of shape, size and location. However in this case if the laser marked lines of each set 53, 54 exhibit the same optical effect there will be no visible change upon tilting. Hence it is preferred to vary the form of the laser marking between one set of elements 53, 54 and the next. For example, one set of elements could be diffractive and the other not. Alternative, both could be diffractive but with different diffractive structures so that they exhibit different colours. These options can equally be applied where the regions 74a, 74b are different from one another. The regions 74a, 74b could be laterally offset, e.g. abutting, partially overlapping or spaced from one another. The regions can also be configured to depict images (such as the star and heart examples), and the images may be chosen so as to give rise to animation effects upon tilting.

The pattern 70 need not be a line pattern but could also comprise an array of dots or a checkerboard pattern in two dimensions. If a line pattern is used it need not be rectilinear but could also be sinusoidal lines etc.

In the Figure 14 and 15 comparative examples, the pattern 70 can take any form which attenuates the laser radiation in the first pattern elements 71. For example, the pattern 70 could be a printed ink layer, or a metallisation, or a laminated foil. The pattern 70 need not be visible to the naked eye under normal illumination but could comprise e.g. a fluorescent material in which case appropriate illumination will be needed to view the security effect. The pattern 70 could also be a relief structure in the surface of the layer 2 (or a layer applied thereto), e.g. an optically scattering or matt structure which could be formed by embossing or abrasion for instance.

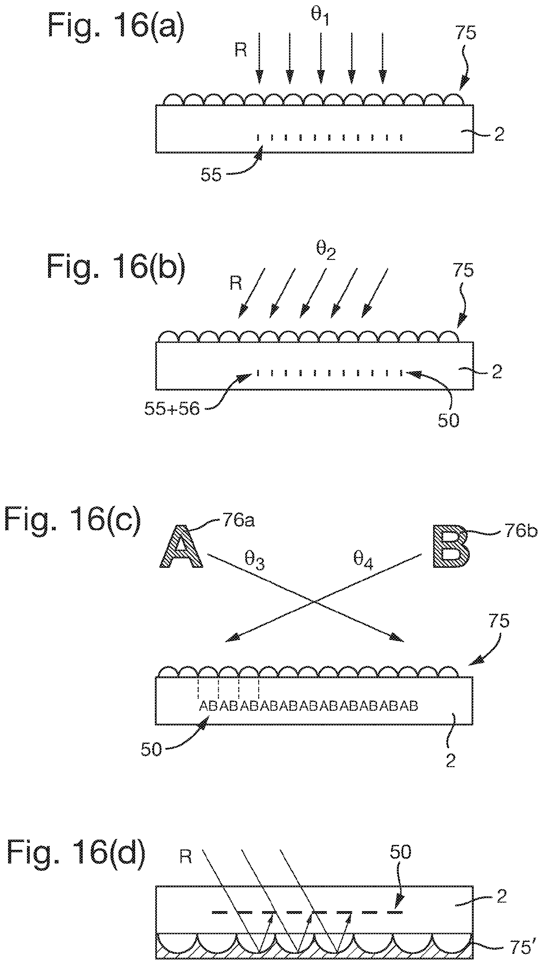

Figure 16 depicts some further comparative examples of security devices and methods for their manufacture. Like the comparative examples of Figures 14 and 15, here the laser irradiation is modified by a component via which it passes before reaching the focal point where it forms the laser marking, but in this case the component is a periodic array of focussing elements 75. Rather than attenuate portions of the irradiation, the array of focussing elements focuses the irradiation into a series of markings with the same periodicity as the focussing element array. A first example is shown in Figures 16(a) and (b). In this case the focussing element array is a periodic array of lenses 75, which may have one-dimensional or two-dimensional periodicity. For instance the array may comprises cylindrical lenses, spherical lenses or aspherical lenses. The array 75 is disposed on the first surface of transparent polymer layer 2, e.g. by embossing, lamination or cast-curing. Intermediate layers (not shown) may be disposed therebetween. A first region of the array is irradiated with laser radiation R of the sort previously discussed with respect to Figure 6. As before, the laser beam could be rastered over the first region, for example. The radiation passes through the focussing element array 75 and is focussed by each lens resulting in an array of laser-marked elements 55, one for each lens. The position of the elements 55 will depend on the irradiation angle θ₁ which in Figure 16(a) is on the normal to the layer 2, with the result that the elements 55 will be located directly below the optical centre of each respective lens, spaced by unmarked regions of the layer 2. When the resulting security device is viewed through the lens array 75, the appearance will vary depending on the viewing angle. When viewed on the normal, the laser marked elements 55 will be directed to the viewer by the lenses 75 and hence an image of the first region will be displayed. The first region could for example be a star shaped symbol as in the Figure 15 example.

To make the device more complex, one or more additional irradiation steps could be performed at different irradiation angles. For instance Figure 16(b) shows a second irradiation step in which a second region of the array 75 is irradiated by the laser from a different irradiation angle θ₂, e.g. 30 degrees from the normal. This will result in the formation of a second set of laser marked elements 56, interspersed between the first set 55. When the completed device is viewed through the lens array 75, the appearance will switch between an image of the first region visible on the normal, and an image of the second region when viewed at the appropriate off-axis position. Of course, three or more such irradiations form different angles could be carried out to provide the device with more images and hence increase its complexity. The irradiation steps could be sequential or simultaneous.

All the same options for the regions and the laser-marked elements apply as discussed in relation to the Figure 15 example. For example, the various regions can be the same or different from one another, and the different sets of laser marked elements 55, 56 can exhibit different optical appearances, e.g. different diffractive colours.

In the above example since the laser irradiation is rastered uniformly over each region, the laser-marked elements will each be of a shape defined by the lens shape (e.g. lines or dots) and when replayed will fill the respective region with the optical effect of the laser marking. However, it is also possible to modify the laser irradiation so that it appears to emanate from an object, e.g. by reflecting it off an object or passing it through a patterned mask representing the object. Exposing the polymer layer to the modified radiation through the lens array 75 will then lead to the formation of a laser marked element by each lens which is a miniature version of the object, seen from a slightly different angle if the object is positioned close enough to the lens array. When the array of microimages is viewed through the lens array, an image of the original object will be reconstructed and again this may appear three-dimensional. This approach too can be repeated at multiple illumination angles. Figure 16(c) shows an example in which the layer 2 is irradiated with laser radiation from a first object (here the letter "A") at a first illumination angle θ₃, resulting in a laser-marked array of miniature "A's". The layer 2 is also irradiated with laser light from a second object (here the letter "B") at a second illumination angle θ₄, resulting in a laser-marked array of miniature "B's", interspersed between the "A's". When the complete device is viewed through the lens array 75, its appearance will switch between the image "A" and the image "B" upon tilting.

Whilst in these examples, the focussing elements have been lenses it is also possible to use focussing mirrors, and an example of this is shown in Figure 16(d) where an array of lens-shaped protrusions has been cast onto or embossed into the surface of layer 2, and their surfaces metallised or otherwise rendered reflective by layer 75'. The layer 2 is irradiated from the side opposite the mirrors such that the radiation is reflected back into the layer 2 before reaching its focus position at which the laser marking 50 will be formed.

The security devices described with respect to Figures 15, 16(b) and 16(c) are effectively examples of venetian blind type devices, lenticular devices and integral imaging devices, respectively. As noted at the outset, these types of devices in which an image array co-operates with a viewing component (such as pattern 70 or focussing element array 75) to generate an optically variable effect require the image array (i.e. the set of elements formed here by the laser markings 50) to be of very high resolution, which is extremely difficult to achieve by conventional printing techniques and the like. However, the presently disclosed laser marking techniques can achieve very narrow line widths, down to 1 micron for example. As such they are well suited for forming the image array in such devices, and likewise in other devices relying on similar principles, such as moire magnifiers, moire interference devices etc.

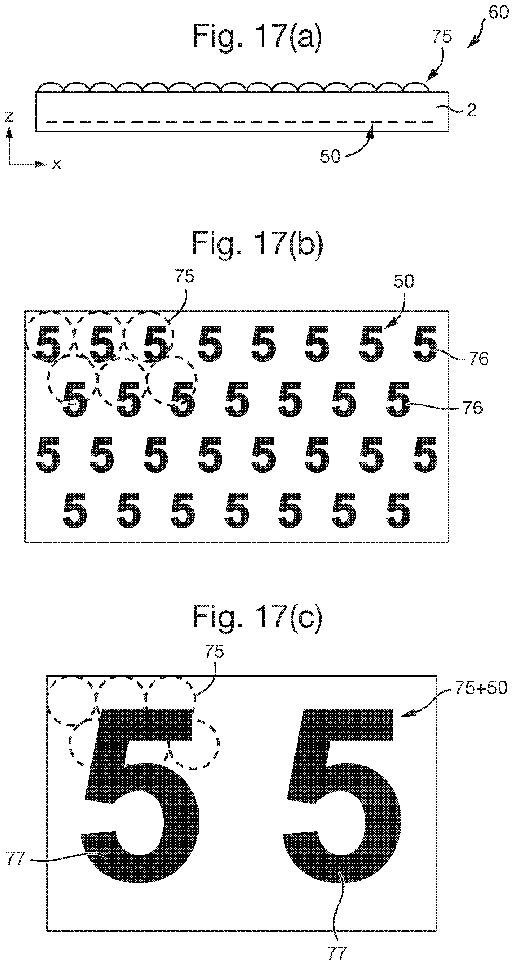

An example of a security device incorporating an image array formed using the above laser marking methods will now be described with reference to Figure 17. In this case the security device is a moire magnifier, comprising (as shown in Figure 17(a)) an image array 50 formed in a transparent polymer layer 2, using the methods described above, defining an array of microimages 76 and an overlapping focussing element array 75 with a pitch or rotational mismatch as necessary to achieve the moire effect. Figure 17(b) depicts part of the image element array 50 as it would appear without the overlapping focusing element array 75, i.e. the non-magnified microimage array (but shown at a greatly increased scale for clarity). In contrast, Figure 17(c) depicts the appearance of the same portion of the completed security device, i.e. the magnified microimages 77, seen when viewed with the overlapping focussing element array, at one viewing angle.

In this example, the microimage array is formed using any of the laser marking methods described above and will be located either inside the layer 2 or on the second surface thereof. It should be noted that while methods involving irradiation of the layer 2 through the lens array could be used (as discussed in relation to Figure 16) this is not essential and the laser marking 50 could be formed before the lens array 75 is applied or from the opposite side of the structure. Each laser marked microimage 76 can display any of the optical effects previously discussed such as optical scattering, fluorescence and/or diffraction, but preferable all of the microimjage 76 display the same optical effect, at least over a zone of the device large enough to form one of the magnified microimages 77 in use. Figure 17(b) shows the laser marking 50 in plan view and it will be seen that the laser marked elements 76 form a regular array of microimages which here each convey the digit "5". In this case all of the microimages are of identical shape and size. The remainder of the layer 2 forms a contiguous, uniform background surrounding the microimages.

Figure 17(c) shows the completed security device, i.e. the image element array 50 shown in Figure 17(b) plus an overlapping focusing element array 75, from a first viewing angle which here is approximately normal to the plane of the device. It should be noted that the security device is depicted at the same scale as used in Figure 17(b): the apparent enlargement is the effect of the focusing element array 75 now included. The moire effect acts to magnify the microimage array such that magnified versions of the microimages are displayed. In this example just two of the magnified microimages are shown. In practice, the size of the enlarged images and their orientation relative to the device will depend on the degree of mismatch between the focussing element array. This will be fixed once the focusing element array is joined to the image array.

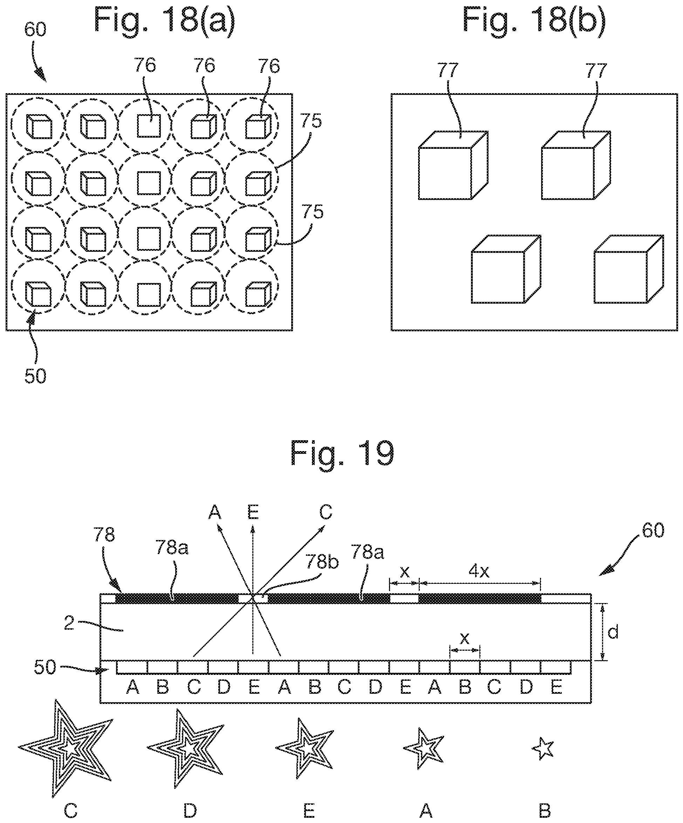

In the above example security device, the microimages are all identical to one another, such that the device can be considered a "pure" moire magnifier. However, the same principles can be applied to "hybrid" moire magnifier / integral imaging devices, in which the microimages depict an object or scene from different viewpoints. Such microimages are considered substantially identical to one another for the purposes of the present invention. An example of such a device is shown schematically in Figure 18, where Figure 18(a) shows the unmagnified microimage array, without the effect of focusing elements 75, and Figure 18(b) shows the appearance of the finished device, i.e. the magnified image. As shown in Figure 18(a), the microimages 76 show an object, here a cube, from different angles. It should be noted that the microimages are formed as laser-marked lines, corresponding to the black lines of the cubes in the Figure. In the magnified image (Figure 18(b)), the moire effect generates magnified, 3D versions of the cube labelled 77. As the device is tilted the magnified cubes 34 will appear to move across the device which, combined with the 3D appearance of the images, amounts to an effect with significant visual impact.

Figure 19 shows a security device 20 which operates on similar principles to those of the venetian blind device described above with respect to Figure 15. In this case, a viewing component 78 is provided on a first surface of transparent substrate 2 and forms a masking grid of opaque lines 78a spaced by gaps 78b. The viewing component 78 can be formed by any desired technique such as printing or metallisation. An image element array 50 is formed within the laser 2 or on the second surface thereof by the laser marking techniques disclosed here in and exhibits a pattern comprising a sequence of image components, labelled A, B, C, etc. Each of the complete images A, B, C, etc. from which the image elements are taken is shown under the cross-section of the device and it will be seen that these comprise a sequence of animation steps depicting a star symbol changing in size. To create the pattern formed in laser marking 50, the five images A to E are split into elements or "slices" and interleaved with one another so that a slice of image A is positioned next to a slice of image B, which in turn is positioned next to a slice of image C, and so forth. The resulting pattern is used to control the laser apparatus and is thus written into the marking 50.

The device could be designed to be viewed in reflected or transmitted light. Transmitted light is preferred since the contrast in the image can generally be perceived more clearly and in addition the same visual effect can be viewed from both sides of the device. When the device is viewed from any one angle, the image slices from only one of the images A to E are visible. For example, in the configuration shown in Figure 19, when the device is viewed straight-on, only the image slices forming image E will be visible, and thus the device as a whole will appear to exhibit a complete reproduction of image E. Provided the dimensions of the device are correctly selected, when the device is observed from different angles, different images will become visible. For example, when the device is viewed from position A, only the image slices forming image A will be visible through the masking grid 78, the device as a whole whereby exhibiting the complete image A. Similarly, when the device is viewed from position C only the image slices forming image C will be visible. As such, as the device is tilted and the viewer observes it at different angles, different stages of the animation will be seen and, provided the images are printed in the correct sequence, an animation will be perceived. In the present example this will appear as a star symbol increasing or decreasing as the device is tilted. Thus, in this case the animation is perceived as a zooming in and out but in other cases the images could be arranged to depict, for example, perceived motion (e.g. a horse galloping), morphing (e.g. a sun changing into a moon) or perceived 3D depth (by providing multiple images of the same object, but from slightly different angles). Of course, in other examples, fewer images (e.g. 2) could be interleaved resulting in a "switch" from one image to another at certain tilt angles, rather than an animation effect.

In order to achieve this effect, the width of each image slice, X, must be smaller than the distance d between the viewing component 78 and the laser marking 50, preferably several times smaller, such that there is a high aspect ratio of the distance d to image slice width X. This is necessary in order that a sufficient portion of the pattern in laser marking 50 can be revealed through tilting of the device. If the aspect ratio were too low, it would be necessary to tilt the device to very high angles before any change in image will be perceived. In a preferred example, each image slice has a width X of the order of 5 to 10 µm, and the distance d is approximately 25 to 35 µm. The use of the above-described laser marking process to form the pattern 50 is therefore particularly advantageous since the high resolution nature of the process allows the formation of image elements at these small dimensions.

The dimensions of the masking grid 78 are generally larger than those of the pattern elements 50, requiring opaque stripes of width ((n-1)X) where n is the number of images to be revealed (here, five), spaced by transparent regions of approximately the same width as that of the image slices (X). Thus, in this example the opaque regions P₂ of the masking grid have a width of around 20 to 40 µm.

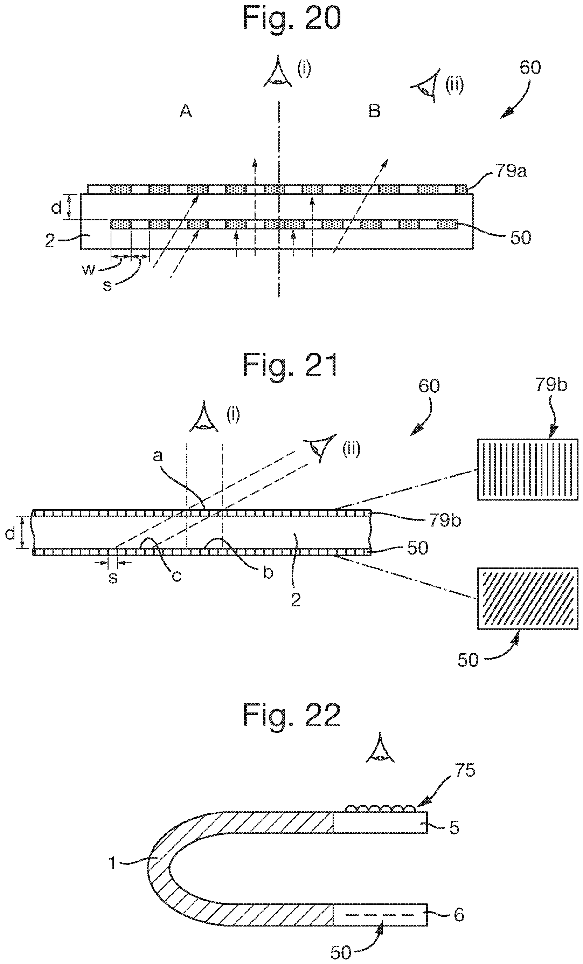

Figure 20 shows a further example of a venetian blind-type security device in cross-section, comprising first and second patterns 79a and 50. The first pattern 79a is another example of a viewing component and can either be formed on the surface of the layer 2 by the disclosed laser marking techniques or by any other technique such as demetallisation or printing. The second pattern 50 is formed by the laser marking techniques disclosed here in and is inside the layer 2 or on its opposite surface. In this example, the device has two laterally offset regions A and B. In region A, the visible pattern elements of pattern 79a and pattern 50 are identical and aligned with one another. In area B the patterns 79a and 50 are identical in pitch but 180° out of phase with one another such that the visible elements of pattern 79a align with the transparent elements of second pattern 50, and vice versa.

When viewed in transmission from directly above, observer (i) will perceive region A as having a lower optical density than region B where light transmission is blocked by the interplay between the two patterns. In contrast, when viewed from an angle at the position of observer (ii), area A will appear relatively optically dense compared with area B, since light will now be able to pass through aligned transparent regions of patterns 79a and 50 in area B, whereas it will be blocked by the alignment between pattern elements in area A. This "contrast flip" between areas A and B provides an easily testable, distinctive effect. In order for the switch to be observable at relatively low tilt angles, the aspect ratio of the support layer thickness relative to the spacing of the pattern elements should again be at least one-to-one. It should be noted that it is not essential to ensure an entirely accurate registration between the two patterns 79a and 50 since provided the sizing of the pattern elements is correct, a switch in contrast between the two regions will still be visible as the device is tilted.

Figure 21 shows a further example of a security device in cross-section which here takes the form of a moire interference device. In this embodiment, two patterns 79b and 50 are provided on a transparent layer 2 in the same manner as described for Figure 20. To form a moire interference device, the patterns 79b and 50 are configured with a mismatch between them such that they combine to form moire interference fringes. In the example shown, each of the patterns 79b and 50 consists of an array of line elements, with those of one pattern rotated relative to those of the other. In other cases, the mismatch could be provided by a pitch variation rather than a rotation, and/or isolated distortions within one or other of the patterns. When viewed from above such that the two patterns are viewed in combination with one another, moire interference bands are visible and these will appear to move relative to the device depending on the viewing angle. This is due to the precise portions of the two patterns which appear to overlap changing as the viewing angle changes. For instance, in the example of Figure 21, when viewed directly from above, portion a of pattern 79b will appear to overlap and therefore interfere with portion b of pattern 50, whereas at a second viewing angle illustrated by observer (ii), the same portion a of pattern 79b will appear to overlap and therefore interfere with a different portion c of the second pattern 50. In order to achieve significant perceived motion at relatively low viewing angles, a high aspect ratio of the spacing between the two patterns (represented by the thickness d of layer 2) relative to the spacing s of the line elements in each of the patterns is required. For example, where the line elements have a width and spacing of around 5 µm, a thickness d of around 25 µm is suitable. No registration between the two patterns 79b and 50 is required.

Whilst in many cases it is preferred for the viewing component (such as masking pattern 70, focussing element array 75 or any of patterns 78, 79a, 79b) and the laser marking to be in fixed overlapping relation to one another, this is not essential. In other cases the two parts of the device could be located in separate regions of a security document, which is manipulable so that they can be overlapped in use and the optically variable effect observed. Figure 22 shows an example of such a security document, e.g. a banknote 1. In this example, a viewing component such as a lens array 75 is provided in a first window region 5 at one edge of the document 1, and the laser marking 50 forming the image array is located in a second window region 6 at the opposite edge of the banknote. In order to view the optically variable effect, the document can be folded so as to position the lens array 75 over the laser marking 50 so that they co-operate in one of the manners already described. A similar result can be achieved by placing the parts of the device on different pages of a booklet type security document, e.g. a passport.

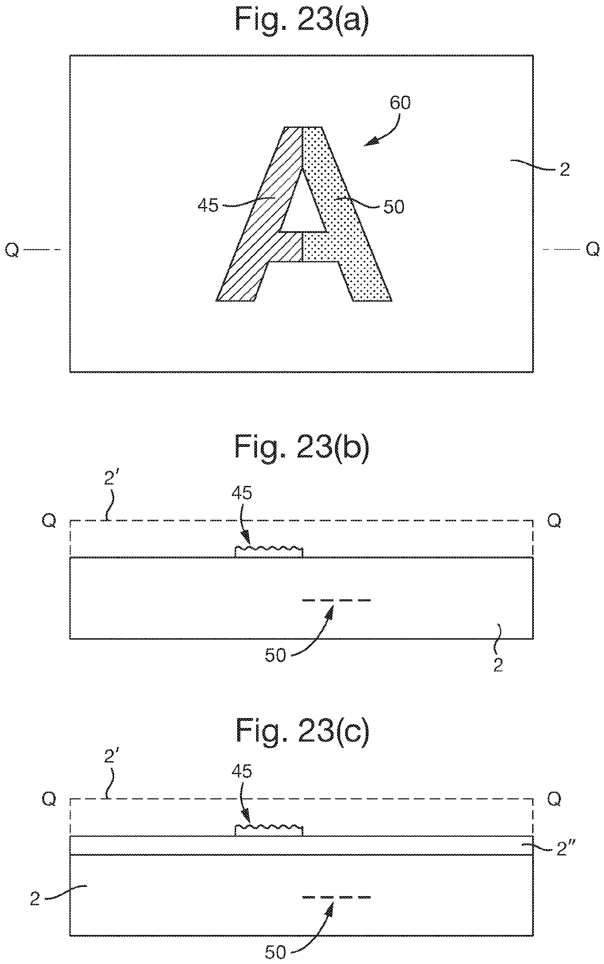

Figure 23 shows an example of another security device 60 in accordance with a further comparative example. Here the security device 60 comprises two diffractive elements 45, 50. The first diffractive element 45 is formed in a conventional manner, e.g. by embossing or cast-curing a relief structure and applying a reflection enhancing material thereto (e.g. metal or an HRI material such as ZnS). The first diffractive element 45 is applied to a first surface of a transparent layer 2 either directly (Figure 23(b)) or indirectly (Figure 23(c)) via one or more transparent intermediate layers 2". The first diffractive element can be applied as a foil by hot or cold stamping, or lamination etc., or could be directly cast-cured onto layer 2. A protective layer 2' may overlie the first diffractive element 45 and optionally the rest of the construction. Alternatively the first diffractive element 45 could be a volume hologram. The diffractive element 45 could be of any sort, e.g. a diffraction grating, kinegram™ or hologram.

Inside the transparent polymer layer 2 or on the second surface thereof, the second diffractive element 50 is formed by laser marking using the techniques discussed above in relation to Figure 6. For instance the laser marking could be an array of dots or lines as described previously, and may have areas of different properties.

The first and second diffractive devices 45, 50 are configured so as to co-operate with one another to produce a secure effect. That is, they interact with one another in such a way as to link the two components two one another. For instance, in the present example, the first diffractive element 45 forms a first portion of an image (here, the left half of the letter "A"), and the laser marking 50 forms a second portion of the image (here, the right half of the letter "A") such that when viewed in combination the complete image is formed. Of course, this may require certain observation conditions (such as illumination from certain angles) to reveal the full image, depending on the nature of the two diffractive devices. The need for exact register between the first diffractive element 45 and laser marking 50 in order to correctly complete the image represents a significant challenge for would-be counterfeiters. In other cases the two components 45 and 50 may interact in other ways - for instance, both may display the same diffractive colour at a certain viewing angle while mismatching at others.

By forming a single security device from two diffractive elements 45, 50 each provided in the different manners mentioned, a surprising optical effect is achieved since whilst both parts exhibit diffraction, they will behave differently upon tilting the device. This is unexpected to the observer since they appear together to be one and the same device. The difference in behaviour may be a result of the diffractive effects themselves, and/or due to parallax between the elements if there is an optical spacing.

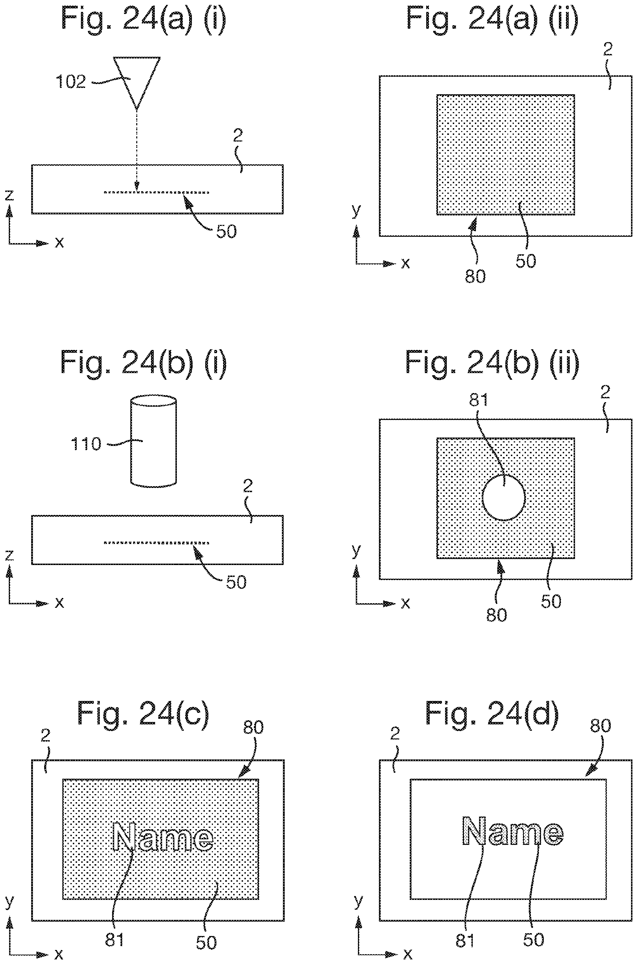

Figure 24 illustrates another method of manufacturing a security element in accordance with a comparative example. As shown in Figure 24(a) in (i) cross-section and (ii) plan view), in a first step a laser marking 50 is formed across a first region 80 of a transparent polymer layer 2. The laser marking is performed using the technique described in relation to Figure 6 above, using short duration laser pulses. The layer 2 may form part of a multilayer structure such as any of those previously described. The laser marking 50 can have any of the optical effects previously mentioned such as increased optical density, optical scattering, fluorescence and /or diffraction. Most preferably the laser marking forms a diffractive structure such as any of the exemplary diffractive devices discussed above. The first region 50 could encompass the whole of layer 2 or only a part thereof any may be configured with a peripheral shape to convey indicia.

In a second step, shown in Figure 24(b), one or more parts 81 of the first region 80 are heated so as to erase or reduce the optical effect(s) of the laser marking 50 in those part(s) 81. This can be achieved by any convenient heating means, such as stamping with a heated die 110 the lateral shape of which corresponds to the desired part(s) of the laser marking to be deleted. Pressure can also be applied to the layer 2 during heating to assist in removal of the laser marking 50 in the part(s) 81. The heating causes the polymer to relax and/or flow, leading to the at least partial reversal of the modifications caused by the laser irradiation. Preferably the polymer is heated to at least its glass transition temperature in the part(s) 81, but this is not essential. It can be determined whether sufficient heating has been applied by observing whether any optical effect is still being exhibited by the part(s) 81 after heating and, if necessary, increasing the temperature, duration and/or pressure of the heating.

The result is that the laser marking 50 remains only, or exhibits its full optical effect only, in a second region corresponding to the first region 80 minus the heated part(s) 81. In the example shown in Figures 24(a) and (b), the first region 80 is a rectangle and the heated part 81 is a circular area at the centre of the rectangle so that after heating the laser marking 50 is exhibited only by the rectangular area surrounding the circle 81.

This can be made use of to impart indicia to the security device without necessarily modifying the laser irradiation step itself. In particular, this may find particular application in personalising or individualising security devices, e.g. with data distinguishing the security device from other like security devices (either between individual devices or between batches of devices). For instance, the data conveyed by the final second region in which the laser marking remains could be a serial number, a name, date of birth or other bibliographic information, or an image such as fingerprint or portrait.

For example, it may be desirable to produce the laser marking 50 for a set of security devices, e.g. on documents such as passports or driving licences, at one central location without personalising those documents. The blank documents can then be sent to issuing authorities which are equipped with suitable heating apparatus and can personalise each security device by removing parts of the laser marking 50 as described above.

While hot stamping of the laser marking 50 is a preferred method of heating, any other heating technique could also be used such as IR irradiation, microwave irradiation or application of heated liquid or gas jets.

As shown in Figure 24(c) and (d), the indicia conveyed by the finished security device could be negative or positive indicia. For example, in Figure 24(c), the first region 80 is again a rectangle and the parts 81 in which the laser marking 50 has been removed by heating correspond to the letters "Name" with the result that this word appears in negative, surrounded by the optical effect of the laser marking 50. Alternatively, in Figure 24(d), the first region 80 is again a rectangle but here all of the parts of that rectangle apart from areas corresponding to the letters "Name" have been heated to remove the laser marking therein. This leaves the word "Name" defined positively by the laser marking 50, surrounded by an unmarked region.

It should be noted that whilst it is preferred that the optical effect of the laser marking 50 is completely removed in the heated parts, this is not essential. All that is required is that the optical effect is diminished or changed so that a contrast exists between the heated parts and the non-heated parts.

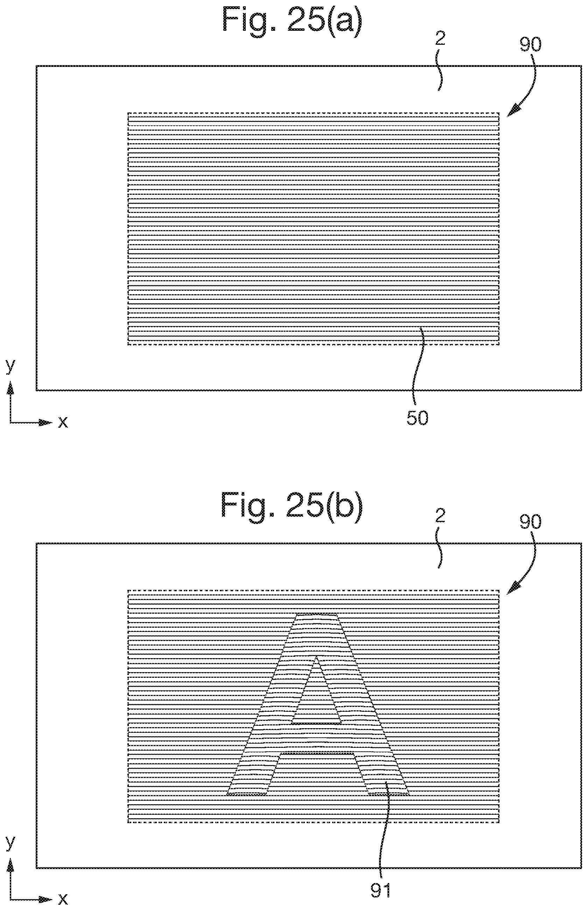

More generally, heating of the sort described with reference to Figure 24 might alter the laser marking in some other way than removing it or diminishing its optical effect. For instance, the laser marking might be distorted by the heating, with or without reducing its optical effect (e.g. diffractive effect). This still results in a recognisable visual distinction between the heated and unheated parts of the device. An example will be described with reference to Figure 25. Here, Figure 25(a) depicts a laser marking 50 formed across a first region 90 of a transparent polymer layer 2, in much the same way as described with reference to Figure 24(a) above. In this example, the laser marking 50 comprises an array of straight, parallel laser-marked lines extending along the x-axis. In practice, each line may be continuous or could be made up of a series of separate element (e.g. dots). The laser marked lines give rise to a diffractive effect as previously described, although other optical effects such as scattering could be employed instead.

A part 91 of the laser marked region 90 is then heated, e.g. using a hot die, as described with reference to Figure 24(b) above. In this case the part 91 has the shape of the letter "A". The heated polymer undergoes a degree of flow which distorts the laser marked lines in the part 91, e.g. causing them to shift their position and/or change their shape. The result is shown in Figure 25(b). It will be seen that the laser marked lines are still present within the area 91 but they are no longer rectilinear and they are not well aligned with the lines outside the part 91. As a result, the part 91 can be visually distinguished (albeit perhaps faintly) from the rest of region 90 surrounding it and the letter "A" is exhibited by the security device. (It should be noted that, for clarity, both the periphery of the laser marked region 90 and that of part 91 are denoted with dashed lines in Figure 25, but these will typically not be present in practice).

As noted above, the optical effect (e.g. diffractive effect) of the laser marking may or may not additionally be diminished in the part 91 relative to that exhibited in the unheated portion of the region. If the optical effect is to be retained, the temperature (and optional pressure) applied during the heating step need to be balanced such that the polymer softens to enable some flow, but maintaining its structural integrity. In a particular example, this was achieved in a polycarbonate substrate containing a diffractive laser marking formed of a line array (each line made up of dots), a part of which was then subject to heating to about 180 degrees C and about 650 psi pressure, resulting in the described distortion of the laser marked lines (but retaining a diffractive effect) in the heated part. In this example, the polycarbonate substrate was about 600 microns thick. However any substrate thickness can be used provided the laser markings remain internal to the layer (and, if the layer is to be self-supporting, the resulting layer is robust enough to be handled).

## Claims

1. A method of manufacturing a security device, comprising:
providing a polymer substrate (200) of which a first region (4a) is absorbent to a laser wavelength, and a second region (4b) is substantially visually transparent and transparent to the laser wavelength, the first and second regions of the transparent polymer layer being laterally offset from one another; and
irradiating part(s) of the first region and part(s) of the second region of the transparent polymer layer with laser radiation of the laser wavelength, to form a laser marking in and/or on the polymer substrate;
wherein, at least during the irradiation of the part(s) of the second region of the transparent polymer layer, the laser radiation is pulsed laser radiation with a pulse duration of 100 ps or less;
such that the appearance of the portion of the laser marking in the first region of the transparent polymer layer is different from the appearance of the portion of the laser marking in the second region of the transparent polymer layer.

2. A method according to claim 1, wherein in the first region of the polymer substrate, the laser radiation is absorbed resulting in heat causing modification of polymer substrate.

3. A method according to claim 1 or claim 2, wherein the portion of the laser marking in the first region of the transparent polymer layer appears blackened or charred.

4. A method according to any of the preceding claims, wherein the portion of the laser marking in the second region of the transparent polymer layer is internal to the transparent polymer layer.

5. A method according to any of the preceding claims, wherein the portion of the laser marking in the second region of the transparent polymer layer exhibits any one or more of: a greater optical density than its surroundings; optical scattering; blackening; and diffraction.

6. A method according to any of the preceding claims, wherein the portion of the laser marking in the second region of the transparent polymer layer is configured as a diffractive structure, wherein the diffractive structure preferably comprises an array of laser-marked dots or lines.

7. A method according to any of the preceding claims, wherein the same laser source is used for irradiation of the first and second portions of the laser marking.

8. A method according to any of the preceding claims, wherein the first and second portions of the laser marking are formed in one continuous laser irradiation step.

9. A method according to any of the preceding claims, wherein the parameters of the laser irradiation are the same during irradiation of the part(s) of the first region and during irradiation of the part(s) of the second region forming the laser marking.

10. A method according to any of the preceding claims, wherein the polymer substrate comprises a transparent polymer layer incorporating or to which is applied an additive which is absorbent to the laser wavelength, the additive being present in the first region and not in the second region.

11. A method according to any of the preceding claims, wherein the polymer substrate comprises a first polymer material which is absorbent to the laser wavelength and a second polymer material which is substantially visually transparent and transparent to the laser wavelength, the first polymer material being located only in the first region of the polymer substrate.

12. A method according to claim 11, wherein either:
the first and second polymer materials are arranged side by side in a single layer of the polymer substrate, one of the polymer materials preferably formed as an insert within the other; or
the polymer substrate is a multilayer structure comprising a first layer at least a region of which is formed of the first polymer material, and a second layer formed of the second polymer material, the first and second layers at least partially overlapping one another and the first layer including at least one gap therein or a portion thereof which is transparent to the laser wavelength, the gap or portion in the first layer overlapping the second polymer material and corresponding to the second region.

13. A security device comprising a polymer substrate (200) exhibiting a laser marking of which first and second portions have different appearances from one another and are registered to one another, wherein a first region (4a) of the polymer substrate is absorbent to a laser wavelength, and a second region (4b) of the transparent polymer layer is substantially visually transparent and transparent to the laser wavelength, the first and second regions of the transparent polymer layer being laterally offset from one another, the first portion of the laser marking being located in the first region and the second portion of the laser marking being located in the second region.

14. A security device according to claim 13, manufactured in accordance with any of claims 1 to 12.

15. A security document comprising a security device according to claim 13 or 14.

16. A plurality of security devices each in accordance with claim 13 or 14, or of security documents each in accordance with claim 15, wherein the relative position of the first and second portions of the laser marking is substantially the same on each of the plurality.

## Patentansprüche

1. Verfahren zum Herstellen einer Sicherheitsvorrichtung, das Folgendes umfasst:
Bereitstellen eines Polymersubstrats (200), von dem eine erste Region (4a) für eine Laserwellenlänge absorbierend ist, und eine zweite Region (4b) im Wesentlichen visuell transparent und für die Laserwellenlänge transparent ist, wobei die erste und die zweite Region der transparenten Polymerschicht zueinander seitlich versetzt sind; und
Bestrahlen eines Teils/von Teilen der ersten Region und eines Teils/von Teilen der zweiten Region der transparenten Polymerschicht mit Laserstrahlung der Laserwellenlänge, um eine Lasermarkierung in und/oder auf dem Polymersubstrat auszubilden;
wobei wenigstens während der Bestrahlung des Teils/der Teile der zweiten Region der transparenten Polymerschicht die Laserstrahlung Pulslaserstrahlung mit einer Pulsdauer von 100 ps oder weniger ist;
derart, dass sich das Erscheinungsbild des Abschnitts der Lasermarkierung in der ersten Region der transparenten Polymerschicht von dem Erscheinungsbild des Abschnitts der Lasermarkierung in der zweiten Region der transparenten Polymerschicht unterscheidet.

2. Verfahren nach Anspruch 1, wobei in der ersten Region des Polymersubstrats die Laserstrahlung absorbiert wird, was zu einer Wärme führt, die eine Modifikation des Polymersubstrats verursacht.

3. Verfahren nach Anspruch 1 oder 2, wobei der Abschnitt der Lasermarkierung in der ersten Region der transparenten Polymerschicht geschwärzt oder verkohlt erscheint.

4. Verfahren nach einem der vorhergehenden Ansprüche, wobei der Abschnitt der Lasermarkierung in der zweiten Region der transparenten Polymerschicht innerlich zu der transparenten Polymerschicht liegt.

5. Verfahren nach einem der vorhergehenden Ansprüche, wobei der Abschnitt der Lasermarkierung in der zweiten Region der transparenten Polymerschicht Beliebiges von Folgendem vorweist: eine größere optische Dichte als seine Umgebung; optische Streuung; Schwärzung; und/oder Diffraktion.

6. Verfahren nach einem der vorhergehenden Ansprüche, wobei der Abschnitt der Lasermarkierung in der zweiten Region der transparenten Polymerschicht als eine diffraktive Struktur konfiguriert ist, wobei die diffraktive Struktur vorzugsweise ein Array von lasermarkierten Punkten oder Linien umfasst.

7. Verfahren nach einem der vorhergehenden Ansprüche, wobei die gleiche Laserquelle für die Bestrahlung des ersten und des zweiten Abschnitts der Lasermarkierung verwendet wird.

8. Verfahren nach einem der vorhergehenden Ansprüche, wobei der erste und der zweite Abschnitt der Lasermarkierung in einem Schritt der fortlaufenden Laserbestrahlung ausgebildet werden.

9. Verfahren nach einem der vorhergehenden Ansprüche, wobei die Parameter der Laserbestrahlung während der Bestrahlung des Teils/der Teile der ersten Region und während der Bestrahlung des Teils/der Teile der zweiten Region, die die Lasermarkierung ausbilden, die gleichen sind.

10. Verfahren nach einem der vorhergehenden Ansprüche, wobei das Polymersubstrat eine transparente Polymerschicht umfasst, die ein Additiv, das für die Laserwellenlänge absorbierend ist, einschließt oder auf die dieses aufgebracht ist, wobei das Additiv in der ersten Region und nicht in der zweiten Region vorhanden ist.

11. Verfahren nach einem der vorhergehenden Ansprüche, wobei das Polymersubstrat ein erstes Polymermaterial, das für die Laserwellenlänge absorbierend ist, und ein zweites Polymermaterial, das im Wesentlichen visuell transparent und für die Laserwellenlänge transparent ist, umfasst, wobei das erste Polymermaterial nur in der ersten Region des Polymersubstrats gelegen ist.

12. Verfahren nach Anspruch 11, wobei entweder:
das erste und das zweite Polymermaterial in einer einzigen Schicht des Polymersubstrats nebeneinander angeordnet sind, wobei eines der Polymermaterialien vorzugsweise als ein Einsatz innerhalb des anderen ausgebildet ist; oder
das Polymersubstrat eine mehrschichtige Struktur ist, die eine erste Schicht, von der wenigstens eine Region aus dem ersten Polymermaterial ausgebildet ist, und eine zweite Schicht, die aus dem zweiten Polymermaterial ausgebildet ist, umfasst, wobei die erste und die zweite Schicht einander wenigstens teilweise überlappen und die erste Schicht wenigstens eine Lücke darin oder einen Abschnitt davon beinhaltet, die/der für die Laserwellenlänge absorbierend ist, wobei die Lücke oder der Abschnitt in der ersten Schicht das zweite Polymermaterial überlappt und der zweiten Region entspricht.

13. Sicherheitsvorrichtung, die ein Polymersubstrat (200) umfasst, das eine Lasermarkierung vorweist, von der der erste und der zweite Abschnitt voneinander unterschiedliche Erscheinungsbilder aufweisen und zueinander passgenau sind, wobei eine erste Region (4a) des Polymersubstrats für eine Laserwellenlänge absorbierend ist, und eine zweite Region (4b) der transparenten Polymerschicht im Wesentlichen visuell transparent und für die Laserwellenlänge transparent ist, wobei die erste und die zweite Region der transparenten Polymerschicht zueinander seitlich versetzt sind, wobei der erste Abschnitt der Lasermarkierung in der ersten Region gelegen ist und der zweite Abschnitt der Lasermarkierung in der zweiten Region gelegen ist.

14. Sicherheitsvorrichtung nach Anspruch 13, die nach einem der Ansprüche 1 bis 12 hergestellt ist.

15. Sicherheitsdokument, das eine Sicherheitsvorrichtung nach Anspruch 13 oder 14 umfasst.

16. Mehrere Sicherheitsvorrichtungen jeweils nach Anspruch 13 oder 14 oder mehrere Sicherheitsdokumente jeweils nach Anspruch 15, wobei die relative Position des ersten und des zweiten Abschnitts der Lasermarkierung auf jeder/jedem der mehreren im Wesentlichen die gleiche ist.

## Revendications

1. Procédé de fabrication d'un dispositif de sécurité, comprenant :
la fourniture d'un substrat polymère (200) dont une première région (4a) est absorbante à une longueur d'onde laser, et une seconde région (4b) est sensiblement visuellement transparente et transparente à la longueur d'onde laser, les première et seconde régions de la couche polymère transparente étant décalées latéralement l'une de l'autre ; et
l'exposition d'une ou des parties de la première région et d'une ou des parties de la seconde région de la couche polymère transparente avec un rayonnement laser de la longueur d'onde laser, pour former un marquage laser dans et/ou sur le substrat polymère ;
au moins pendant l'exposition de la ou des parties de la seconde région de la couche polymère transparente, le rayonnement laser étant un rayonnement laser pulsé avec une durée d'impulsion de 100 ps ou moins ;
de telle sorte que l'aspect de la partie du marquage laser dans la première région de la couche polymère transparente est différent de l'aspect de la partie du marquage laser dans la seconde région de la couche polymère transparente.

2. Procédé selon la revendication 1, dans la première région du substrat polymère, le rayonnement laser étant absorbé, ce qui entraîne une modification thermique du substrat polymère.

3. Procédé selon la revendication 1 ou la revendication 2, la partie du marquage laser dans la première région de la couche polymère transparente apparaissant noircie ou carbonisée.

4. Procédé selon l'une quelconque des revendications précédentes, la partie du marquage laser dans la seconde région de la couche polymère transparente étant interne à la couche polymère transparente.

5. Procédé selon l'une quelconque des revendications précédentes, la partie du marquage laser dans la seconde région de la couche polymère transparente présentant l'un quelconque ou plusieurs parmi : une densité optique supérieure à celle de son environnement ; une diffusion optique ; un noircissement ; et une diffraction.

6. Procédé selon l'une quelconque des revendications précédentes, la partie du marquage laser dans la seconde région de la couche polymère transparente étant conçue comme une structure diffractive, la structure diffractive comprenant de préférence un réseau de points ou de lignes marqué(e)s au laser.

7. Procédé selon l'une quelconque des revendications précédentes, la même source laser étant utilisée pour l'exposition des première et seconde parties du marquage laser.

8. Procédé selon l'une quelconque des revendications précédentes, les première et seconde parties du marquage laser étant formées en une étape d'exposition laser continue.

9. Procédé selon l'une quelconque des revendications précédentes, les paramètres de l'exposition laser étant les mêmes lors de l'exposition de la ou des parties de la première région et lors de l'exposition de la ou des parties de la seconde région formant le marquage laser.

10. Procédé selon l'une quelconque des revendications précédentes, le substrat polymère comprenant une couche polymère transparente incorporant un additif ou sur laquelle est appliqué un additif qui est absorbant à la longueur d'onde laser, l'additif étant présent dans la première région et non dans la seconde région.

11. Procédé selon l'une quelconque des revendications précédentes, le substrat polymère comprenant un premier matériau polymère qui est absorbant à la longueur d'onde laser et un second matériau polymère qui est sensiblement visuellement transparent et transparent à la longueur d'onde laser, le premier matériau polymère étant situé uniquement dans la première région du substrat polymère.

12. Procédé selon la revendication 11, soit :
les premier et second matériaux polymères étant disposés côte à côte dans une seule couche du substrat polymère, l'un des matériaux polymères étant de préférence formé comme un insert dans l'autre ; soit
le substrat polymère étant une structure multicouche comprenant une première couche dont au moins une région est formée du premier matériau polymère, et une seconde couche formée du second matériau polymère, les première et seconde couches se chevauchant au moins partiellement et la première couche comportant au moins un espace ou une partie de cel-ci qui est transparente à la longueur d'onde du laser, l'espace ou la partie de la première couche chevauchant le second matériau polymère et correspondant à la seconde région.

13. Dispositif de sécurité comprenant un substrat polymère (200) présentant un marquage laser dont des première et seconde parties ont des aspects différents l'un de l'autre et sont alignées l'une sur l'autre, une première région (4a) du substrat polymère étant absorbante pour une longueur d'onde laser, et une seconde région (4b) de la couche polymère transparente étant sensiblement visuellement transparente et transparente à la longueur d'onde laser, les première et seconde régions de la couche polymère transparente étant décalées latéralement l'une de l'autre, la première partie du marquage laser étant située dans la première région et la seconde partie du marquage laser étant située dans la seconde région.

14. Dispositif de sécurité selon la revendication 13, fabriqué selon l'une quelconque des revendications 1 à 12.

15. Document de sécurité comprenant un dispositif de sécurité selon la revendication 13 ou 14.

16. Pluralité de dispositifs de sécurité chacun selon la revendication 13 ou 14, ou de documents de sécurité chacun selon la revendication 15, la position relative des première et seconde parties du marquage laser étant sensiblement la même sur chacune de la pluralité.
